# EUROPÄISCHE PATENTANMELDUNG

(11) **EP 1 938 689 A1**
(43) Veröffentlichungstag der Anmeldung: **02.07.2008**
(21) Anmeldenummer: 06026145.0
(22) Anmeldetag: 18.12.2006
(51) Int. Cl.: A01N 57/12, A01N 47/36, A01N 43/56, A01N 25/32, A01P 13/00

(54) **Penetrationsförderer für Herbizide**

(71) Anmelder: Bayer CropScience AG, 40789 Monheim (DE)
(72) Erfinder: Baur, Peter, Prof. Dr., 56938 Schondorf (DE); Vermeer, Ronald, Dr., 51371 Leverkusen (DE); Süssmann, Rainer, Dr., 65549 Limburg (DE)

(57) **Zusammenfassung**

Die Erfindung betrifft das Gebiet des chemischen Pflanzenschutzes, insbesondere die Verwendung einer speziellen Verbindung als Penetrationsförderer für agrochemische Wirkstoffe aus der Gruppe der Herbizide und Safener sowie Pflanzenschufizmittel enthaltend diese Verbindung. Bei der Verbindung handelt es sich um Tributoxyethylphosphat (TBEP).

## Beschreibung

Die Erfindung betrifft das Gebiet des chemischen Pflanzenschutzes, insbesondere die Verwendung einer speziellen Verbindung als Penetrationsförderer für agrochemische Wirkstoffe aus der Gruppe der Herbizide und Safener sowie Pflanzenschutzmittel enthaltend diese Verbindung. Bei der Verbindung handelt es sich um Tributoxyethylphosphat (CAS Regno: 4712-55-4; im folgenden als TBEP bezeichnet).

Die Förderung der Penetration von Herbiziden und Safenern in Pflanzen wird durch 'Penetrationsförderer' bewirkt. Unter dem Begriff Penetrationsförderer werden Verbindungen verstanden, welche die Aufnahme von Herbiziden und Safenern, allein oder in Mischung, durch die Kutikula einer Pflanze in die Pflanze fördern, d.h. die Aufnahmegeschwindigkeit beschleunigen und/oder die aufgenommene Menge des Wirkstoffs in die Pflanze erhöhen.

Stoffe, welche die Penetration von Herbiziden und/oder Safenern durch die Kutikula der Pflanze erhöhen sind wertvolle Hilfsstoffe im chemischen Pflanzenschutz. Obgleich bereits verschiedene Stoffklassen als Penetrationsförderer bekannt sind (siehe z.B. WO 2005/104844 A), besteht unter verschiedenen Gesichtspunkten immer noch ein Bedarf an weiteren Verbindungen mit solchen Eigenschaften.

Aufgabe der Erfindung ist es daher, weitere Stoffe mit penetrationsfördernden Eigenschaften für agrochemische Wirkstoffe bereitzustellen.

Es wurde nun überraschend gefunden, dass sich das Lösungsmittel TBEP im Gegensatz zu vielen anderen Lösungsmitteln in bestimmten niedrigeren Aufwandmengen und bestimmten Mischungsverhältnissen zum Wirkstoff zur Erhöhung der Penetration von Herbiziden und Safenern, allein oder in Mischung, durch die Kutikula der Pflanze und damit zur biologischen Wirkungssteigerung von Pflanzenschutzmitteln eignet.

TBEP ist schon als Lösungsmittel in entsprechend hohen Aufwandmengen im Pflanzenschutz bekannt, wie in Herbiziden (siehe z.B. EP 1251736 B1, EP 1164842 B1) und Insektiziden (siehe z.B. JP 08291004 A, US 5674517 A). Aus GB 2022070 A ist TBEP bekannt zur Entblätterung, wobei es in Verhältnissen von (TBEP : Wirkstoff) 2 :1 bis 4 : 1 den zu herbiziden Wirkstoffen zugesetzt wurde. Auf dem Gebiet der Fungizide erscheint die Verwendung von TBEP noch weitgehend unbekannt zu sein.

Gegenstand der Erfindung ist daher ein Pflanzenschutzmittel, enthaltend die Komponenten
(A) einen oder mehrere Wirkstoffe aus der Gruppe der Herbizide und/oder Safener,
(B) Tributoxyethylphosphat (TBEP) in Dosierungen von 2,5 bis 150,0 g/ha,
(C) gegebenenfalls einen oder mehrere Emulgatoren, vorzugsweise aus der Gruppe der ionischen und nicht-ionischen Emulgatoren und deren Gemische mit HLB-Werten von 10 bis 17, und
(D) gegebenenfalls einen oder mehrere weitere Hilfs - und Zusatzstoffe.

Weiterer Gegenstand der Erfindung ist die Verwendung der Komponenten des hier beschriebenen Pflanzenschutzmittels, welches auf die Schadpflanzen appliziert wird.

Gegenstand der Erfindung ist auch ein Verfahren zur Förderung der Penetration,
wobei man die Komponenten
(A) einen oder mehrere Wirkstoffe aus der Gruppe der Herbizide und/oder Safener,
(B) Tributoxyethylphosphat (TBEP) in Dosierungen von 2,5 bis 150,0 g/ha und
(C) gegebenenfalls einen oder mehrere Emulgatoren, vorzugsweise aus der Gruppe der ionischen und nicht-ionischen Emulgatoren und deren Gemische mit HLB-Werten von 10 bis 17, gleichzeitig oder sequentiell auf die Schadpflanzen appliziert.

Ebenso Gegenstand der Erfindung ist die Verwendung des hier beschriebenen Verfahrens, wobei man die Komponenten gleichzeitig oder sequentiell auf die Schadpflanzen appliziert.

Da der Wirkmechanismus von TBEP als Penetrationsförderer grundsätzlich unabhängig von der Art des eingesetzten agrochemischen Wirkstoffs ist, kommen alle Wirkstoffe aus der Gruppe der Herbizide in Frage, deren biologische Wirksamkeit gegen Unkäuter im weiteren Sinne, im folgenden als Schadpflanzen bezeichnet, durch erhöhtes Eindringen in die Schadpflanze gesteigert werden kann. In Falle der Wirkstoffe aus der Gruppe der Safener wird ein erhöhtes Eindringen in die Kulturpflanze gewünscht, damit die Schutzwirkung gesteigert werden kann.

Vorzugsweise genannt seien Wirkstoffe aus der Gruppe der Herbizide, umfassend auch Pflanzenwuchsregulatoren, und aus der Gruppe der Safener, sowie Pflanzennährstoffe, die über systemische Eigenschaften verfügen, sowie als Kombinationspartner in Frage kommende Kontaktmittel. Im folgenden beinhaltet der Begriff Herbizide sowohl Herbizide wie auch Pflanzenwuchsregulatoren soweit aus dem Zusammenhang nichts anderes hervorgeht.

Weiterhin bevorzugt innerhalb der oben genannten Gruppen sind systemische Wirkstoffe, d.h. solche die von der Pflanze durch die Blätter oder über die Wurzeln aufgenommen und im Saftstrom, dem Transportsystem oder Pflanze, weitergeleitet werden. Besonders bevorzugt sind solche Wirkstoffe, die einen Log P Wert von ≤ 4 aufweisen (bestimmt gemäß EEC-Directive 79/831 Annex V. A8 durch HPLC, Gradientenmethode, Acetronitril /0,1 % wässrige Phosphorsäure), insbesondere solche mit einem Log P Wert von ≤ 4 und ≥ 0,1.

Beispiele für einzelne Wirkstoffe aus der Gruppe der Herbizide, umfassend auch Pflanzenwuchsregulatoren, und aus der Gruppe der Safener sind:

### Herbizide

Beispiele für Herbizide sind z.B. ALS-Inhibitoren (Acetolactat-Synthetase-Inhibitoren) oder Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkancarbonsäureester, Cyclo-hexandionabkömmlinge, Imidazolinone, Phosphor-haltige Herbizide, z.B. vom Glufosinate-Typ oder vom Glyphosate-Typ, Pyrimidinyloxy-pyridincarbonsäure-Derivate, Pyrimidyloxy-benzoesäure-Derivate, Triazolopyrimidin-sulfonamid-Derivate sowie S-(N-Aryl-N-alkylcarbamoylmethyl)-dithiophosphorsäureester, Harnstoffe sowie Hydroxybenzonitrile.

Bei den herbiziden Wirkstoffen aus der Gruppe der ALS-Inhibitoren wie Sulfonylharnstoffe sind im Sinne der vorliegenden Erfindung neben den neutralen Verbindungen stets auch deren Salze mit anorganischen und/oder organischen Gegenionen zu verstehen. So können z.B. Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.
A) Bevorzugte ALS-Inhibitoren entstammen aus der Reihe der Sulfonylharnstoffe und/oder ihrer Salze, z.B. Pyrimidin- oder Triazinylaminocarbonyl-[benzol-, pyridin-, pyrazol-, thiophen- und (alkylsulfonyl)-alkylamino-]-sulfamide. Solche geeigneten Sulfonylharnstoffe sind beispielsweise
A1) Phenyl- und Benzylsulfonylharnstoffe und verwandte Verbindungen, z.B.
   1-(2-Chlorphenylsulfonyl)-3-(4-methoxy-6-methyl-1,3,5-triazin-2-yl)-harnstoff (Chlorsulfuron),
   1-(2-Ethoxycarbonylphenylsulfonyl)-3-(4-chlor-6-methoxypyrimidin-2-yl)-harnstoff (Chlorimuron-ethyl),
   1-(2-Methoxyphenylsulfonyl)-3-(4-methoxy-6-methyl-1,3,5-triazin-2-yl)-harnstoff (Metsulfuron-methyl),
   1-(2-Chlorethoxyphenylsulfonyl)-3-(4-methoxy-6-methyl-1,3,5-triazin-2-yl)-harnstoff (Triasulfuron),
   1-(2-Methoxycarbonylphenylsulfonyl)-3-(4,6-dimethylpyrimidin-2-yl)-harnstoff (Sulfumeturon-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)-harnstoff (Bensulfuron-methyl),
   1-(2-Methoxycarbonylphenylsulfonyl)-3-(4,6-bis-(difluormethoxy)pyrimidin-2-yl)-harnstoff, (Primisulfuron-methyl),
   3-(4-Ethyl-6-methoxy-1,3,5-triazin-2-yl)-1-(2,3-dihydro-1,1-dioxo-2-methylbenzo-[b]thiophen-7-sulfonyl)-harnstoff (EP-A 0 079 683),
   3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683),
   3-(4-Methoxy-6-methyl-1,3,5-triazin-2-yl)-1-(2-methoxycarbonyl-5-jod-phenylsulfonyl)-harnstoff (lodosulfuron-methyl und dessen Natriumsalz, WO 92/13845), DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79),
   Methyl-2-[3-(4,6-dimethoxypyrimidin-2-yl)ureidosulfonyl]-4-methansulfon-amido-methyl-benzoat (Mesosulfuron-methyl, WO 95/10507),
   N,N-Dimethyl-2-[3-(4,6-dimethoxypyrimidin-2-yl)ureidosulfonyl]-4-formylamino-benzamid (Foramsulfuron, WO 95/01344);
A2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
A3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.),
   DPX-A8947, Azimsulfuron, (s. Brighton Crop Prot. Conf. Weeds' 1995, S. 65);
A4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
A5) Pyridylsulfonylharnstoffe, z.B.
   1-(3-N,N-Dimethylaminocarbonylpyridin-2-ylsulfonyl)-3-(4,6-dimethoxypyrimidin-2-yl)-harnstoff (Nicosulfuron),
   1-(3-Ethylsulfonylpyridin-2-ylsulfonyl)-3-(-(4,6-dimethoxypyrimidin-2-yl)-harnstoff (Rimsulfuron),
   2-[3-(4,6-Dimethoxypyrimidin-2-yl)-ureidosulfonyl]-6-trifluormethyl-3-pyridin-carbonsäuremethylester, Natriumsalz (DPX-KE 459, Flupyrsulfuron, s. Brighton Crop Prot. Conf. Weeds, 1995, S. 49),
   Pyridylsulfonylharnstoffe, wie sie z.B. in DE-A 40 00 503 und DE-A 40 30 577 beschrieben sind, vorzugsweise solche der Formel 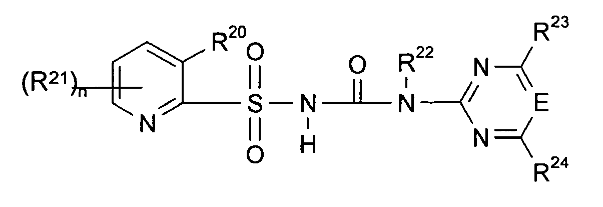 worin
   - E: CH oder N, vorzugsweise CH,
   - R²⁰: lod oder NR²⁵R²⁶,
   - R²¹: Wasserstoff, Halogen, Cyano, (C₁-C₃)-Alkyl, (C₁-C₃)-Alkoxy, (C₁-C₃)- Halogenalkyl, (C₁-C₃)-Halogenalkoxy, (C₁-C₃)-Alkylthio, (C₁-C₃)-Alkoxy-(C₁-C₃)-alkyl, (C₁-C₃)-Alkoxy-carbonyl, Mono- oder Di-((C₁-C₃)-alkyl)-amino, (C₁-C₃)-Alkylsulfinyl oder -sulfonyl, SO₂-NR^{x}R^{y} oder CO-NR^{x}R^{y}, insbesondere Wasserstoff,
   - R^{x}, R^{y}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder -(CH₂)₂-O-(CH₂)₂-,
   - n: 0,1,2 oder 3, vorzugsweise 0 oder 1 ist,
   - R²²: Wasserstoff oder CH₃,
   - R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
   - R²⁴: (C₁-C₂)-Alkyl, (C₁-C₂)-Halogenalkoxy, vorzugsweise OCHF₂, oder (C₁-C₂)-Alkoxy,
   - R²⁵: (C₁-C₄)-Alkyl,
   - R²⁶: (C₁-C₄)-Alkylsulfonyl oder
   R²⁵ und R²⁶ gemeinsam eine Kette der Formel -(CH₂)₃SO₂- oder -(CH₂)₄SO₂-bedeuten, z.B. 3-(4,6-Dimethoxypyrimiden-2-yl)-1-(3-N-methylsulfonyl-N-methylaminopyridin-2-yl)-sulfonylharnstoff, oder deren Salze;
A6) Alkoxyphenoxysulfonylharnstoffe, wie sie z.B. in EP-A 0 342 569 beschrieben sind, vorzugsweise solche der Formel 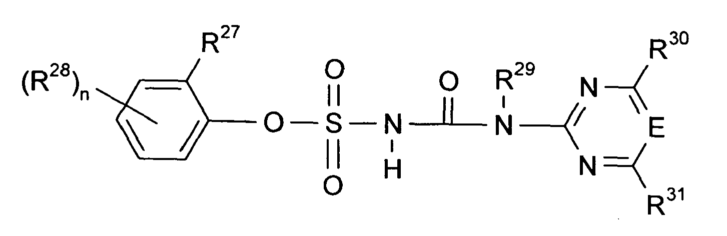 worin
   - E: CH oder N, vorzugsweise CH,
   - R²⁷: Ethoxy, Propoxy oder Isopropoxy,
   - R²⁸: Halogen, NO₂, CF₃, CN, (C₁-C₄)-Alkyl, (C₁-C₄)-Alkoxy, (C₁-C₄)-Alkylthio oder (C₁-C₃)-Alkoxy-carbonyl, vorzugsweise in 6-Position am Phenylring,
   - n: 0, 1, 2 oder 3, vorzugsweise 0 oder 1,
   - R²⁹: Wasserstoff, (C₁-C₄)-Alkyl oder (C₃-C₄)-Alkenyl,
   - R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylharnstoff, oder deren Salze;
A7) Imidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus;
   Typische Vertreter dieser Wirkstoffe sind unter anderem die nachfolgend aufgeführten Verbindungen: Amidosulfuron, Azimsulfuron, Bensulfuron-Methyl, Chlorimuron-Ethyl, Chlorsulfuron, Cinosulfuron, Cyclosulfamuron, Ethametsulfuron-Methyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, Iodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 2000)).
B) Herbizide vom Typ der Phenoxyphenoxy- und
   Heteroaryloxyphenoxycarbonsäure-Derivate, wie
B1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl),
   2-(4-(4-Brom-2-chlorphenoxy)-phenoxy)-propionsäuremethylester (DE-A 26 01 548),
   2-(4-(4-Brom-2-fluorphenoxy)-phenoxy)-propionsäuremethylester (US-A 4,808,750),
   2-(4-(2-Chlor-4-trifluormethylphenoxy)-phenoxy)-propionsäuremethylester (DE-A 24 33 067),
   2-(4-(2-Fluor-4-trifluormethylphenoxy)-phenoxy)-propionsäuremethylester (US-A 4,808,750),
   2-(4-(2,4-Dichlorbenzyl)-phenoxy)-propionsäuremethylester (DE-A 24 17 487),
   4-(4-(4-Trifluormethylphenoxy)-phenoxy)-pent-2-en-säureethylester,
   2-(4-(4-Trifluormethylphenoxy)-phenoxy)-propionsäuremethylester (DE-A 24 33 067);
B2) "Einkernige" Heteroaryloxyphenoxy-alkancarbonsäure-Derivate, z.B.
   2-(4-(3,5-Dichlorpyridyl-2-oxy)-phenoxy)-propionsäureethylester (EP-A 0 002 925),
   2-(4-(3,5-Dichlorpyridyl-2-oxy)-phenoxy)-propionsäurepropargylester (EP-A 0 003 114),
   2-(4-(3-Chlor-5-trifluormethyl-2-pyridyloxy)-phenoxy)-propionsäuremethylester (EP-A 0 003 890),
   2-(4-(3-Chlor-5-trifluormethyl-2-pyridyloxy)-phenoxy)-propionsäureethylester (EP-A 0 003 890),
   2-(4-(5-Chlor-3-fluor-2-pyridyloxy)-phenoxy)-propionsäurepropargylester (EP-A 0 191 736),
   2-(4-(5-Trifluormethyl-2-pyridyloxy)-phenoxy)-propionsäurebutylester (Fluazifop-butyl);
B3) "Zweikernige" Heteroaryloxyphenoxy-alkancarbonsäure-Derivate, z.B. 2-(4-(6-Chlor-2-chinoxalyloxy)-phenoxy)-propionsäuremethylester und -ethylester (Quizalofopmethyl und Quizalofopethyl),
   2-(4-(6-Fluor-2-chinoxalyloxy)-phenoxy)-propionsäuremethylester (s. J. Pest. Sci. Vol. 10, 61 (1985)),
   2-(4-(6-Chlor-2-chinoxalyloxy)-phenoxy)-propionsäure-2-isopropylidenaminooxy-ethylester (Propaquizafop),
   2-(4-(6-Chlorbenzoxazol-2-yl-oxy)-phenoxy)-propionsäureethylester (Fenoxaprop-ethyl), dessen D(+) Isomer (Fenoxaprop-P-ethyl) und 2-(4-(6-Chlorbenzthiazol-2-yloxy)-phenoxy)-propionsäureethylester (DE-A 26 40 730),
   2-(4-(6-Chlorchinoxalyloxy)-phenoxy)-propionsäure-tetrahydro-2-furylmethylester (EP-A 0 323 727);
C) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
D) Thiocarbamate, z.B.
   S-Ethyl-N,N-dipropylthiocarbamat (EPTC),
   S-Ethyl-N,N-diisobutylthiocarbamat (Butylate);
E) Cyclohexandionoxime, z.B.
   3-(1-Allyloxyiminobutyl)-4-hydroxy-6,6-dimethyl-2-oxocyclohex-3-encarbon-säuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)-iminobutyl)-5-(2-ethylthiopropyl)-3-hydroxy-cyclohex-2-en-1-on,
   2-(1-(3-Chlorallyloxy)-iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-en-on (Cycloxydim),
   2-(1-Ethoxyiminopropyl)-5-(2,4,6-trimethylphenyl)-3-hydroxy-cyclohex-2-en-1-on (Tralkoxydim);
F) Imidazolinone, z.B.
   2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
   5-Ethyl-2-(4-isopropyl-4-methyl-5-oxo-2-imidazolin-2-yl)-pyridin-3-carbonsäure (Imazethapyr),
   2-(4-Isopropyl-4-methyl-5-oxo-2-imidazolin-2-yl)-chinolin-3-carbonsäure (Imazaquin),
   2-(4-Isopropyl-4-methyl-5-oxo-2-imidazolin-2-yl)-pyridin-3-carbonsäure (Imazapyr),
   5-Methyl-2-(4-isopropyl-4-methyl-5-oxo-2-imidazolin-2-yl)-pyridin-3-carbonsäure (Imazethamethapyr);
G) Triazolopyrimidinsulfonamid-Derivate, z.B.
   N-(2,6-Difluorphenyl)-7-methyl-1,2,4-triazolo[1,5-c]pyrimidin-2-sulfonamid (Flumetsulam),
   N-(2,6-Dichlor-3-methylphenyl)-5,7-dimethoxy-1,2,4-triazolo[1,5-c]pyrimidin-2-sulfonamid,
   N-(2,6-Difluorphenyl)-7-fluor-5-methoxy-1,2,4-triazolo[1, 5-c]-pyrimidin-2-sulfonamid,
   N-(2,6-Dichlor-3-methylphenyl)-7-chlor-5-methoxy-1,2,4-triazolo[1,5-c]-pyrimidin-2-sulfonamid,
   N-(2-Chlor-6-methoxycarbonyl)-5,7-dimethyl-1,2,4-triazolo[1,5-c]-pyrimidin-2-sulfonamid (EP-A 0 343 752, US-A 4,988,812);
H) Benzoylcyclohexandione, z.B.
   2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634), 2-(2-Nitro-3-methylsulfonylbenzoyl)-4,4-dimethylcyclohexan-1,3-dion (WO 91/13548);
I) Pyrimidinyloxy-pyridincarbonsäure- bzw. Pyrimidinyloxybenzoesäure-Derivate, z.B.
   3-(4,6-Dimethoxypyrimidin-2-yl)-oxy-pyridin-2-carbonsäurebenzylester (EP-A 0 249 707),
   3-(4,6-Dimethoxypyrimidin-2-yl)-oxy-pyridin-2-carbonsäuremethylester (EP-A 0 249 707),
   2,6-Bis[(4,6-dimethoxypyrimidin-2-yl)-oxy]-benzoesäure (EP-A 0 321 846),
   2,6-Bis[(4,6-dimethoxypyrimidin-2-yl)-oxy]-benzoesäure-1-(ethoxycarbonyl-oxyethyl)-ester (EP-A 0 472 113);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-98/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (K) 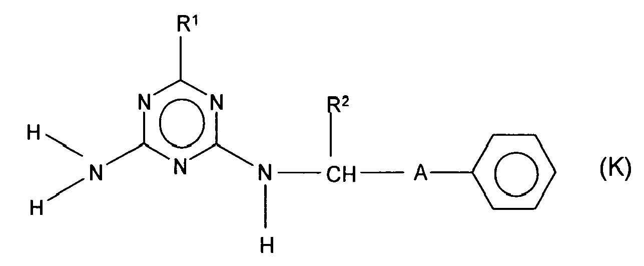 worin
   - R¹: (C₁-C₄)-Alkyl oder (C₁-C₄)-Haloalkyl;
   - R²: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂-CH₂-O-, -CH₂-CH₂-CH₂-O-
   bedeuten, besonders bevorzugt solche der Formel K1-K7 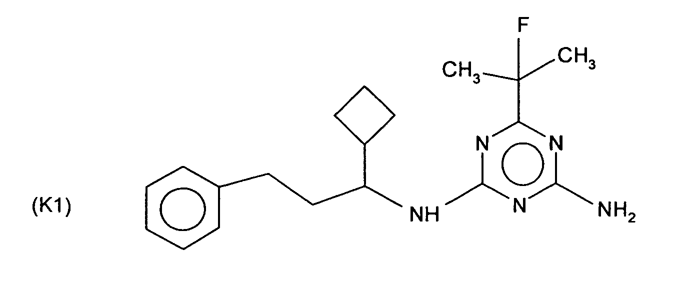 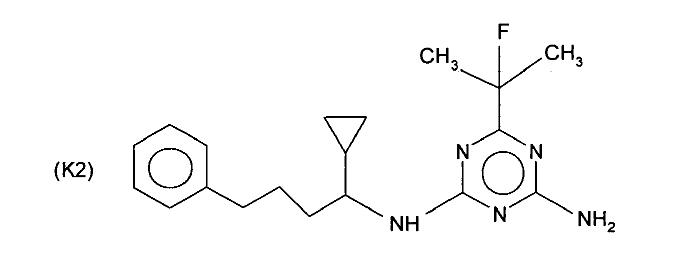 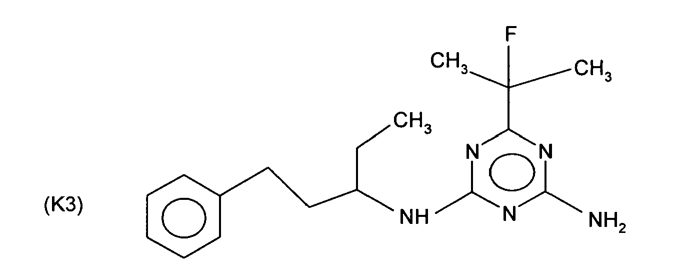 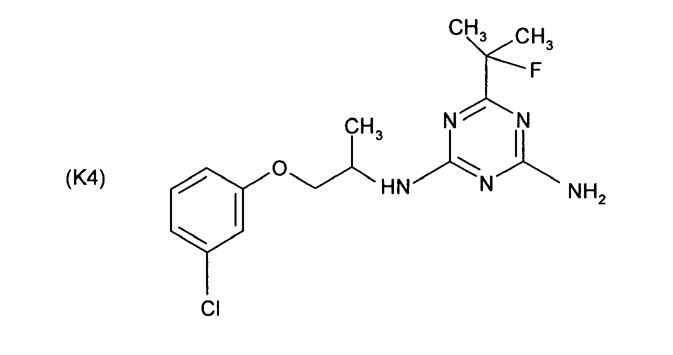 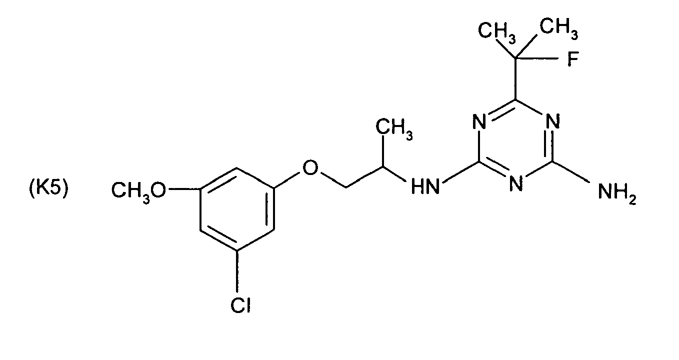 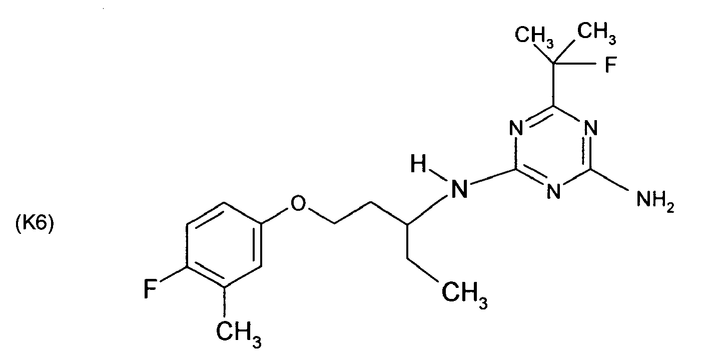 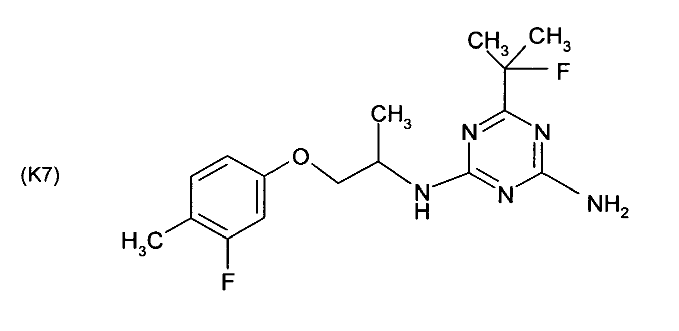
L) phosphorhaltige Herbizide, z.B. eine oder mehrere Verbindungen der Formel (IV) oder deren Derivate wie Salze, 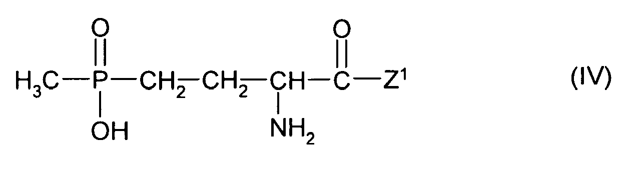 worin
   Z¹ einen Rest der Formel -OM, -NHCH(CH₃)CONHCH(CH₃)CO₂M oder -NHCH(CH₃)CONHCH[CH₂CH(CH₃)₂]CO₂M und
   M = H oder ein Salz bildendes Kation bedeuten,
   und/oder eine oder mehrere Verbindungen der Formel (V) oder deren Derivate wie Salze, 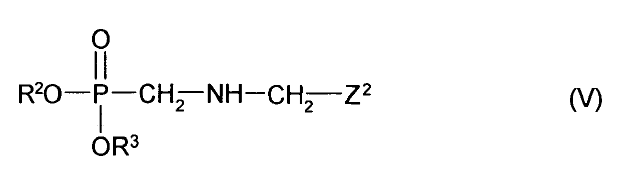 worin
   Z² einen Rest der Formel CN oder CO₂R¹ bedeutet, in dem R¹ = Q oder ein Salz bildendes Kation ist und dabei Q = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
   R²,R³ jeweils unabhängig voneinander H, Alkyl, C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, oder Biphenyl oder ein Salz bildendes Kation bedeuten.
   Beispiele für Wirkstoffe der Formel (IV) und (V) sind folgende:
   - Glufosinate und dessen Ammoniumsalz in racemischer Form, d.h. 2-Amino-4-[hydroxy(methyl)phosphinoyl]-butansäure bzw. dessen Ammoniumsalz,
   - das L-Enantiomer von Glufosinate und dessen Ammoniumsalz,
   - Bilanafos/Bialaphos, d.h. L-2-Amino-4-[hydroxy(methyl)phosphinoyl]-butanoyl-L-alaninyl-L-alanin und dessen Natriumsalz
   - Glyphosate.
M) Carbamate, z.B. Asulam, Carbetamide, Chloropham und Propham;
N) Benzofurane, z.B. Benfuresate und Ethofumesate;
O) Phytohormone;
P) Auxine und Auxinanaloga, z.B. 4-Indol-3-buttersäure, Indol-3-essigsäure, 1-Naphthylessigsäure, 2-(1-Naphthyl)acetamid und 2-Naphthyloxyessigsäure;
Q) Zytokinine, z.B. Cythokinin, Kinetin und 6-Benzylaminopurin;
R) Gibberelline, z.B. Gibberillinsäure, Gibberillin A4 und A7;
S) Absissinsäure- und deren Derivate;
T) Ethylenvorläufer, z.B. Ethephon;
U) Herbizide aus der Gruppe der Fettsäuresynthetase-Inhibitoren;
V) Harnstoffe, z.B. Chlorotoluron, Dimefuron, Diuron, Fluometuron, Isoproturon, Isouron, Karbutilate, Linuron, Methabenzthiazuron, Metobenzuron, Metoxuron, Monolinuron, Neburon, Siduron und Tebuthiuron und
W) Metamitron.
X) Hydroxybenzonitrile, z.B. wie Bromoxynil und loxynil und deren Salze und Ester, wie Bromoxyniloctanoat und loxyniloctanoat.

Die agrochemischen Wirkstoffe können auch Wachstumsregulatoren sein. Beispiele hierfür sind Ethephon, Tribufos, Cyclanilide und Thidiazuron.

Die Herbizide (Pflanzenwuchsregulatoren) der Gruppen A bis X sind beispielsweise aus den oben jeweils genannten Schriften und/oder aus "The Pesticide Manual", 12. Auflage (2000) bis 14. Auflage (2006), The British Crop Protection Council, "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA,1990, bekannt.

### Safener

Beispiele für Safener sind unter anderem:
a) Verbindungen der Formeln (S-II) bis (S-IV), 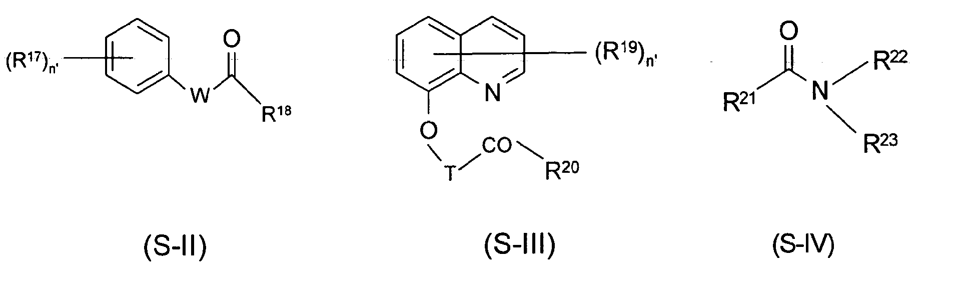 wobei die Symbole und Indizes folgende Bedeutungen haben:
   - n': ist eine natürliche Zahl von 0 bis 5, vorzugsweise 0 bis 3;
   - T: ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist;
   - W: ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-Atom und höchstens ein O-Atom im Ring enthalten ist, vorzugsweise ein Rest aus der Gruppe (W1) bis (W4),

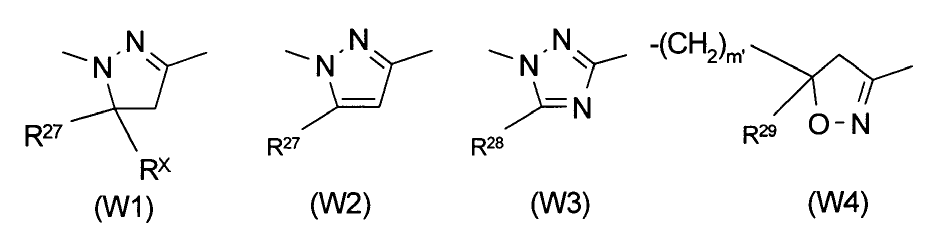

   - m': ist 0 oder 1;
   - R¹⁷, R¹⁹: sind gleich oder verschieden Halogen, (C₁-C₄)Alkyl, (C₁-C₄)Alkoxy, Nitro oder (C₁-C₄)Haloalkyl;
   - R¹⁸, R²⁰: sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-II) bzw. (S-III) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
   - R²⁴: ist Wasserstoff oder ein unsubstituierter oder substituierter aliphatischer Kohlenwasserstoffrest, vorzugsweise mit insgesamt 1 bis 18 C-Atomen;
   - R²⁵: ist Wasserstoff, (C₁-C₆)Alkyl, (C₁-C₆)Alkoxy oder substituiertes oder unsubstituiertes Phenyl;
   - R^{x}: ist H, (C₁-C₈)Alkyl, C₁-C₈(Haloalkyl), (C₁-C₄)Alkoxy(C₁-C₈)Alkyl, Cyano oder COOR²⁶, worin R²⁶ Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkylsilyl ist;
   - R²⁷, R²⁸, R²⁹: sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
   - R²¹: ist (C₁-C₄)Alkyl, (C₁-C₄)Haloalkyl, (C₂-C₄)Alkenyl, (C₂-C₄)Haloalkenyl, (C₃-C₇)Cycloalkyl, vorzugsweise Dichlormethyl;
   - R²², R²³: ist gleich oder verschieden Wasserstoff, (C₁-C₄)Alkyl, (C₂-C₄)Alkenyl, (C₂-C₄)Alkinyl, (C₁-C₄)Haloalkyl, (C₂-C₄)Haloalkenyl, (C₁-C₄)Alkylcarbamoyl-(C₁-C₄)alkyl, (C₂-C₄)Alkenylcarbamoyl-(C₁-C₄)alkyl, (C₁-C₄)Alkoxy-(C₁-C₄)alkyl, Dioxolanyl-(C₁-C₄)alkyl, Thiazolyl, Furyl, Furylalkyl, Thienyl, Piperidyl, substituiertes oder unsubstituiertes Phenyl, oder R²² und R²³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring;
   vorzugsweise Safener folgender Untergruppen von Verbindungen der Formeln (S-II) bis (S-IV):
   - Verbindungen vom Typ der Dichlorphenylpyrazolin-3-carbonsäure (d.h. der Formel (S-II), worin W = (W1) und (R¹⁷)_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (II-1, Mefenpyr-diethyl), Mefenpyr-dimethyl und Mefenpyr (II-0), und verwandte Verbindungen, wie sie in der WO-A-91/07874 beschrieben sind;
   - Derivate der Dichlorphenylpyrazolcarbonsäure (d.h. der Formel (S-II), worin W = (W2) und (R¹⁷)_{n'} = 2,4-Cl₂ ist), vorzugsweise Verbindungen wie 1-(2,4-Dichlorphenyl)-5-methyl-pyrazol-3-carbonsäureethylester (II-2), 1-(2,4-Dichlorphenyl)-5-isopropyl-pyrazol-3-carbonsäureethylester (II-3), 1-(2,4-Dichlorphenyl)-5-(1,1-dimethyl-ethyl)pyrazol-3-carbonsäureethylester (II-4), 1-(2,4-Dichlorphenyl)-5-phenyl-pyrazol-3-carbonsäureethylester (II-5) und verwandte Verbindungen, wie sie in EP-A-0333131 und EP-A-0269806 beschrieben sind;
   - Verbindungen vom Typ der Triazolcarbonsäuren (d.h. der Formel (S-II), worin W = (W3) und (R¹⁷)_{n'} = 2,4-Cl₂ ist), vorzugsweise Verbindungen wie Fenchlorazol-ethyl, d.h. 1-(2,4-Dichlorphenyl)-5-trichlormethyl-(1H)-1,2,4-triazol-3-carbonsäureethylester (II-6), und verwandte Verbindungen (siehe EP-A-0174562 und EP-A-0346620);
   - Verbindungen vom Typ der 5-Benzyl- oder 5-Phenyl-2-isoxazolin-3-carbonsäure oder der 5,5-Diphenyl-2-isoxazolin-3-carbonsäure wie Isoxadifen (II-12), (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureethylester (II-8) und verwandte Verbindungen, wie sie in WO-A- 91/08202 beschrieben sind, oder der 5,5-Diphenyl-2-isoxazolin-carbonsäureethylester (II-9, Isoxadifen-ethyl) oder -n-propylester (II-10) oder der 5-(4-Fluorphenyl)-5-phenyl-2-isoxazolin-3-carbonsäureethylester (II-11), wie sie in der WO-A-95/07897 beschrieben sind.
   - Verbindungen vom Typ der 8-Chinolinoxyessigsäure, z.B. solche der Formel (S-III), worin (R¹⁹)_{n'} = 5-Cl, R²⁰ = OR²⁴ und T = CH₂ ist, vorzugsweise die Verbindungen (5-Chlor-8-chinolinoxy)essigsäure-(1-methylhexyl)-ester (III-1, Cloquintocet-mexyl), (5-Chlor-8-chinolinoxy)essigsäure-(1,3-dimethyl-but-1-yl)-ester (III-2), (5-Chlor-8-chinolinoxy)essigsäure-4-allyl-oxy-butylester (III-3), (5-Chlor-8-chinolinoxy)essigsäure-1-allyloxy-prop-2-ylester (III-4), (5-Chlor-8-chinolinoxy)essigsäureethylester (III-5), (5-Chlor-8-chinolinoxy)essigsäuremethylester (III-6), (5-Chlor-8-chinolinoxy)essigsäureallylester (III-7), (5-Chlor-8-chinolinoxy)essigsäure-2-(2-propyliden-iminoxy)-1-ethylester (III-8), (5-Chlor-8-chinolinoxy)essigsäure-2-oxo-prop-1-ylester (III-9), (5-Chlor-8-chinolinoxy)essigsäure (III-10) und dessen Salze wie sie z.B. in der WO-A-02/34048 beschrieben sind, und-verwandte Verbindungen, wie sie in EP-A-0860750, EP-A-0094349 und EP-A-0191736 oder EP-A-0492366 beschrieben sind.
   - Verbindungen vom Typ der (5-Chlor-8-chinolinoxy)-malonsäure, d.h. der Formel (S-III), worin (R¹⁹)_{n'} = 5-Cl, R²⁰= OR²⁴, T = -CH(COO-Alkyl)- ist, vorzugsweise die Verbindungen (5-Chlor-8-chinolinoxy)-malonsäure-diethylester (III-11), (5-Chlor-8-chinolinoxy)-malonsäurediallylester, (5-Chlor-8-chinolinoxy)-malonsäure-methyl-ethylester und verwandte Verbindungen, wie sie in EP-A-0582198 beschrieben sind.
   - Verbindungen vom Typ der Dichloracetamide, d.h. der Formel (S-IV), vorzugsweise: N,N-Diallyl-2,2-dichloracetamid (Dichlormid (IV-1), aus US 4,137,070), 4-Dichloracetyl-3,4-dihydro-3-methyl-2H-1,4-benzoxazin (IV-2, Benoxacor, aus EP 0149974), N1,N2-Diallyl-N2-dichloracetylglycinamid (DKA-24 (IV-3), aus HU 2143821), 4-Dichloracetyl-1-oxa-4-aza-spiro[4,5]decan (AD-67), 2,2-Dichlor-N-(1,3-dioxolan-2-ylmethyl)-N-(2-propenyl)acetamid (PPG-1292), 3-Dichloracetyl-2,2,5-trimethyloxazolidin (R-29148, IV-4), 3-Dichloracetyl-2,2-dimethyl-5-phenyloxazolidin, 3-Dichloracetyl-2,2-dimethyl-5-(2-thienyl)oxazolidin, 3-Dichloracetyl-5-(2-furanyl)-2,2-dimethyloxazolidin (Furilazole (IV-5), MON 13900), 1-Dichloracetyl-hexahydro-3,3,8a-trimethylpyrrolo[1,2-a]pyrimidin-6(2H)-on (Dicyclonon, BAS 145138),
b) eine oder mehreren Verbindungen aus Gruppe:
   1,8-Naphthalsäureanhydrid, Methyl-diphenylmethoxyacetat, 1-(2-Chlorbenzyl)-3-(1-methyl-1-phenylethyl)harnstoff (Cumyluron), O,O-Diethyl S-2-ethylthioethyl phosphordithioat (Disulfoton), 4-Chlorphenyl-methylcarbamat (Mephenate), O,O-Diethyl-O-phenylphosphorotioat (Dietholate), 4-Carboxy-3,4-dihydro-2H-1-benzopyran-4-essigsäure (CL-304415, CAS-Regno: 31541-57-8),
   Cyanomethoxyimino(phenyl)acetonitril (Cyometrinil), 1,3-Dioxolan-2-ylmethoxyimino(phenyl)acetonitril (Oxabetrinil), 4'-Chlor-2,2,2-trifluoracetophenon-O-1,3-dioxolan-2-ylmethyloxim (Fluxofenim), 4,6-Dichlor-2-phenylpyrimidin (Fenclorim), Benzyl-2-chlor-4-trifluormethyl-1,3-thiazol-5-carboxylat (Flurazole), 2-Dichlormethyl-2-methyl-1,3-dioxolan (MG-191), N-(4-Methylphenyl)-N'-(1-methyl-1-phenylethyl)harnstoff (Dymron), (2,4-Dichlorphenoxy)essigsäure (2,4-D), (4-Chlorphenoxy)essigsäure, (R,S)-2-(4-Chlor-o-tolyloxy)propionsäure (Mecoprop), 4-(2,4-Dichlorphenoxy)buttersäure (2,4-DB), (4-Chlor-o-tolyloxy)essigsäure (MCPA), 4-(4-Chlor-o-tolyloxy)buttersäure, 4-(4-Chlorphenoxy)buttersäure, 3,6-Dichlor-2-methoxybenzoesäure (Dicamba), 1-(Ethoxycarbonyl)ethyl 3,6-dichlor-2-methoxybenzoat (Lactidichlor) sowie deren Salze und Ester, vorzugsweise (C₁-C₈);
c) N-Acylsulfonamide der Formel (S-V) und ihre Salze, 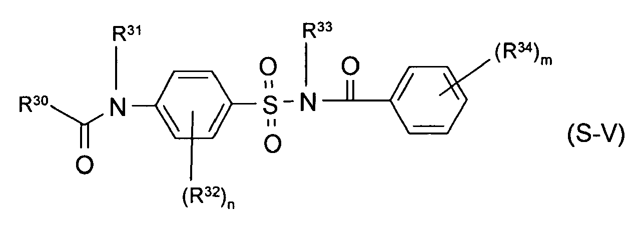 worin
   - R³⁰: Wasserstoff, einen Kohlenwasserstoffrest, einen Kohlenwasserstoffoxyrest, einen Kohlenwasserstoffthiorest oder einen Heterocyclylrest, der vorzugsweise über ein C-Atom gebunden ist, wobei jeder der letztgenannten 4 Reste unsubstituiert oder durch einen oder mehrere gleiche oder verschiedene Reste aus der Gruppe Halogen, Cyano, Nitro, Amino, Hydroxy, Carboxy, Formyl, Carbonamid, Sulfonamid und Reste der Formel -Z^{a}-R^{a} substituiert ist,
   wobei jeder Kohlenwasserstoffteil vorzugsweise 1 bis 20 C-Atome aufweist und ein C-haltiger Rest R³⁰ inklusive Substituenten vorzugsweise 1 bis 30 C-Atome aufweist;
   - R³¹: Wasserstoff oder (C₁-C₄)-Alkyl, vorzugsweise Wasserstoff, oder
   - R³⁰ und R³¹: zusammen mit der Gruppe der Formel -CO-N- den Rest eines 3- bis 8-gliedrigen gesättigten oder ungesättigten Rings;
   - R³²: gleich oder verschieden Halogen, Cyano, Nitro, Amino, Hydroxy, Carboxy, Formyl, CONH₂, SO₂NH₂ oder einen Rest der Formel -Z^{b}-R^{b} ;
   - R³³: Wasserstoff oder (C₁-C₄)-Alkyl, vorzugsweise H;
   - R³⁴: gleich oder verschieden Halogen, Cyano, Nitro, Amino, Hydroxy, Carboxy, CHO, CONH₂, SO₂NH₂ oder einen Rest der Formel -Z^{c}-R^{c} ;
   - R^{a}: einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - R^{b},R^{c}: gleich oder verschieden einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Phosphoryl, Halogen-(C₁-C₄)-alkoxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
   - Z^{a}: eine divalente Gruppe der Formel -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR*- oder -NR*-SO₂-, wobei die rechts angegebene Bindung der jeweiligen divalenten Gruppe die Bindung zum Rest R^{a} ist und wobei die R* in den letztgenannten 5 Resten unabhängig voneinander jeweils H, (C₁-C₄)-Alkyl oder Halo-(C₁-C₄)-alkyl bedeuten;
   - Z^{b}, Z^{c}: unabhängig voneinander eine direkte Bindung oder eine divalente Gruppe der Formel -O-, -S-, -CO-, -CS-, -CO-O-, -CO-S-, -O-CO-, -S-CO-, -SO-, -SO₂-, -NR*-, -SO₂-NR*-, -NR*-SO₂-, -CO-NR*- oder -NR*-CO-, wobei die rechts angegebene Bindung der jeweiligen divalenten Gruppe die Bindung zum Rest R^{b} bzw. R^{c} ist und wobei die R* in den letztgenannten 5 Resten unabhängig voneinander jeweils H, (C₁-C₄)-Alkyl oder Halo-(C₁-C₄)-alkyl bedeuten;
   - n: eine ganze Zahl von 0 bis 4, vorzugsweise 0, 1 oder 2, insbesondere 0 oder 1, und
   - m: eine ganze Zahl von 0 bis 5, vorzugsweise 0, 1, 2 oder 3, insbesondere 0, 1 oder 2; bedeuten;
   vorzugsweise Safener von Verbindungen der Formel (S-V), worin
   - R³⁰ = H₃C-O-CH₂-, R³¹ = R³³ = H, R³⁴ = 2-OMe ist (V-1),
   - R³⁰ = H₃C-O-CH₂-, R³¹ = R³³ = H, R³⁴ = 2-OMe-5-Cl ist (V-2),
   - R³⁰ = Cyclopropyl, R³¹ = R³³ = H, R³⁴ = 2-OMe ist (V-3),
   - R³⁰ = Cyclopropyl, R³¹ = R³³ = H, R³⁴ = 2-OMe-5-Cl ist (V-4),
   - R³⁰ = Cyclopropyl, R³¹ = R³³ = H, R³⁴ = 2-Me ist (V-5),
   - R³⁰ = tert. Butyl, R³¹ = R³³ = H, R³⁴ = 2-OMe ist (V-6).
d) Acylsulfamoylbenzoesäureamide der allgemeinen Formel (S-VI), gegebenenfalls auch in Salzform, 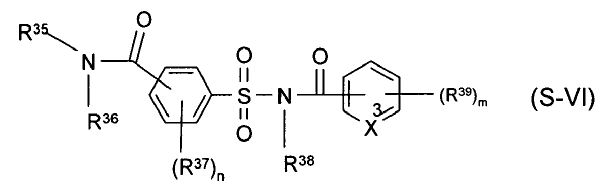 worin
   - X³: CH oder N;
   - R³⁵: Wasserstoff, Heterocyclyl oder einen Kohlenwasserstoffrest, wobei die beiden letztgenannten Reste gegebenenfalls durch einen oder mehrere, gleiche oder verschiedene Reste aus der Gruppe Halogen, Cyano, Nitro, Amino, Hydroxy, Carboxy, CHO, CONH₂, SO₂NH₂ und Z^{a}-R^{a} substituiert sind;
   - R³⁶: Wasserstoff, Hydroxy, (C₁-C₆)-Alkyl, (C₂-C₆)-Alkenyl, (C₂-C₆)-Alkinyl, (C₁-C₆)-Alkoxy, (C₂-C₆)-Alkenyloxy, wobei die fünf letztgenannten Reste gegebenenfalls durch einen oder mehrere, gleiche oder verschiedene Reste aus der Gruppe Halogen, Hydroxy, (C₁-C₄)-Alkyl, (C₁-C₄)-Alkoxy und (C₁-C₄)-Alkylthio substituiert sind, oder
   - R³⁵ und R³⁶: zusammen mit dem sie tragenden Stickstoffatom einen 3- bis 8-gliedrigen gesättigten oder ungesättigten Ring;
   - R³⁷: Halogen, Cyano, Nitro, Amino, Hydroxy, Carboxy, CHO, CONH₂, SO₂NH₂ oder Z^{b}-R^{b};
   - R³⁸: Wasserstoff, (C₁-C₄)-Alkyl, (C₂-C₄)-Alkenyl oder (C₂-C₄)-Alkinyl;
   - R³⁹: Halogen, Cyano, Nitro, Amino, Hydroxy, Carboxy, Phosphoryl, CHO, CONH₂, SO₂NH₂ oder Z^{c}-R^{c};
   - R^{a}: einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Mono- und Di-[(C₁-C₄)-alkyl]-amino substituiert sind;
   - R^{b} R^{c}: gleich oder verschieden einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Phosphoryl, (C₁-C₄)-Haloalkoxy, Mono- und Di-[(C₁-C₄)-alkyl]-amino substituiert sind;
   - Z^{a}: eine divalente Einheit aus der Gruppe O, S, CO, CS, C(O)O, C(O)S, SO, SO₂, NR^{d}, C(O)NR^{d} oder SO₂NR^{d};
   - Z^{b}, Z^{c}: gleich oder verschieden eine direkte Bindung oder eine divalente Einheit aus der Gruppe O, S, CO, CS, C(O)O, C(O)S, SO, SO₂, NR^{d} ,SO₂NR^{d} oder C(O)NR^{d};
   - R^{d}: Wasserstoff, (C₁-C₄)-Alkyl oder (C₁-C₄)-Haloalkyl;
   - n: eine ganze Zahl von 0 bis 4, und
   - m: für den Fall, dass X für CH steht, eine ganze Zahl von 0 bis 5, und für den Fall, dass X für N steht, eine ganze Zahl von 0 bis 4 bedeuten;
   vorzugsweise Safener von Verbindungen der Formel (S-VI), in der
   - X³: CH;
   - R³⁵: Wasserstoff, (C₁-C₆)-Alkyl, (C₃-C₆)-Cycloalkyl, (C₂-C₆)-Alkenyl, (C₅-C₆)-Cycloalkenyl, Phenyl oder 3- bis 6-gliedriges Heterocyclyl mit bis zu drei Heteroatomen aus der Gruppe Stickstoff, Sauerstoff und Schwefel, wobei die sechs letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
   - R³⁶: Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, Hydroxy, (C₁-C₄)-Alkyl, (C₁-C₄)-Alkoxy und (C₁-C₄)-Alkylthio substituiert sind;
   - R³⁷: Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
   - R³⁸: Wasserstoff;
   - R³⁹: Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
   - n: 0, 1 oder 2 und
   - m: 1 oder 2 bedeuten.
   Insbesondere Verbindungen vom Typ der Acylsulfamoylbenzoesäureamide der nachfolgenden Formel (S-VII), die z.B. bekannt sind aus WO-A-99/16744, 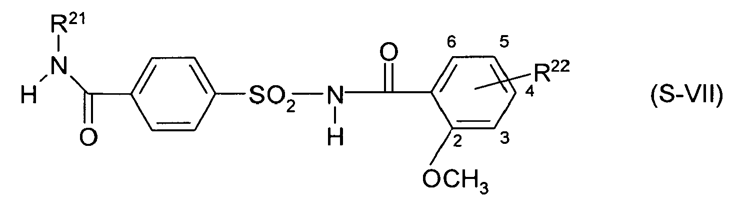 worin
   - R²¹: = Cyclo-Propyl und R²² = H ist (S3-1 = 4-Cyclopropylaminocarbonyl-N-(2-methoxybenzoyl)benzolsulfonamid; Cyprosulfamide);
   - R²¹: = Cyclo-Propyl und R²² = 5-Cl ist (S3-2),
   - R²¹: = Ethyl und R²² = H ist (S3-3),
   - R²¹: = iso-Propyl und R²² = 5-Cl ist (S3-4) und
   - R²¹: = iso-Propyl und R²² = H ist (S3-5 = 4-iso-propylaminocarbonyl-N-(2-methoxybenzoyl)benzolsulfonamid);
e) Verbindungen vom Typ der N-Acylsulfamoylphenylharnstoffe der Formel (S-VIII), die z.B. bekannt sind aus der EP-A-365484, 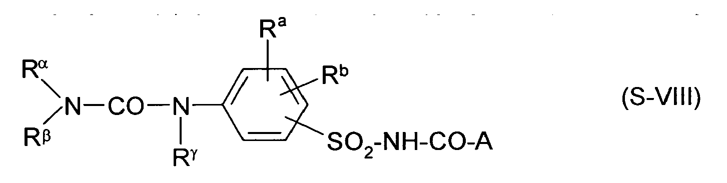 worin
   - A: für einen Rest aus der Gruppe 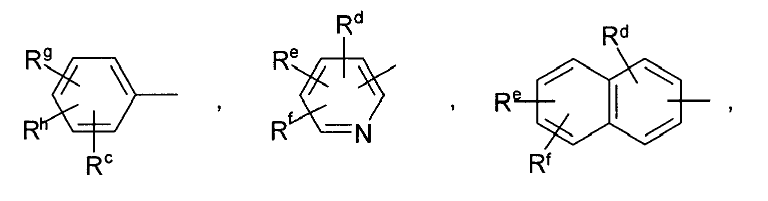 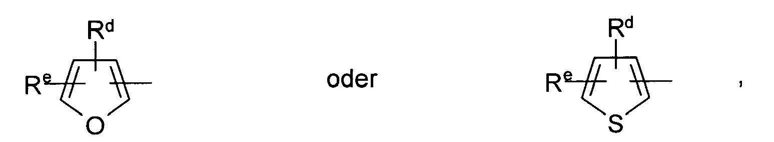
   - R^{α} und R^{β}: unabhängig voneinander für Wasserstoff, C₁-C₈-Alkyl, C₃-C₈-Cycloalkyl, C₃-C₆-Alkenyl, C₃-C₆-Alkinyl, R^{x} 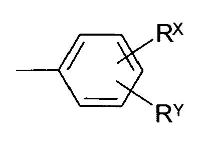 oder durch C₁-C₄ Alkoxy oder 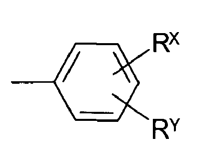 substituiertes C₁-C₄-Alkoxy, oder
   - R^{α} und R^{β}: gemeinsam für eine C₄-C₆-Alkylenbrücke oder eine durch Sauerstoff, Schwefel, SO, SO₂, NH oder -N(C₁-C₄-Alkyl)- unterbrochene C₄-C₆-Alkylenbrücke,
   - R^{γ}: für Wasserstoff oder C₁-C₄-Alkyl,
   - R^{a} und R^{b}: unabhängig voneinander für Wasserstoff, Halogen, Cyan, Nitro, Trifluormethyl, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j}, -CONR^{k}R^{m}, -CORⁿ, -SO₂NR^{k}R^{m} oder -OSO₂-C₁-C₄-Alkyl, oder R^{a} und R^{b} gemeinsam für eine C₃-C₄-Alkylenbrücke, die durch Halogen oder C₁-C₄-Alkyl substituiert sein kann, oder eine C₃-C₄-Alkenylenbrücke, die durch Halogen oder C₁-C₄-Alkyl substituiert sein kann, oder eine C₄-Alkadienylenbrücke, die durch Halogen oder C₁-C₄-Alkyl substituiert sein kann, und
   - R^{g} und R^{h}: unabhängig voneinander für Wasserstoff, Halogen, C₁-C₄-Alkyl, Trifluormethyl, Methoxy, Methylthio oder -COOR^{j} stehen, wobei
   - R^{c}: Wasserstoff, Halogen, C₁-C₄-Alkyl oder Methoxy,
   - R^{d}: Wasserstoff, Halogen, Nitro, C₁-C₄-Alkyl, C₁-C₄-Alkoxy, C₁-C₄-Alkylthio, C₁-C₄-Alkylsulfinyl, C₁-C₄-Alkylsulfonyl, -COOR^{j} oder -CONR^{k}R^{m},
   - R^{e}: Wasserstoff, Halogen, C₁-C₄-Alkyl, -COOR^{j}, Trifluormethyl oder Methoxy, oder R^{d} und R^{e} gemeinsam für eine C₃-C₄-Alkylenbrücke,
   - R^{f}: Wasserstoff, Halogen oder C₁-C₄-Alkyl,
   - R^{X} und R^{Y}: unabhängig voneinander Wasserstoff, Halogen, C₁-C₄-Alkyl, C₁-C₄-Alkoxy, C₁-C₄-Alkylthio, -COOR⁴, Trifluormethyl, Nitro oder Cyan,
   - R^{j}, R^{k} und R^{m}: unabhängig voneinander Wasserstoff oder C₁-C₄-Alkyl,
   - R^{k} und R^{m}: gemeinsam eine C₄-C₆-Alkylenbrücke oder eine durch Sauerstoff, NH oder -N(C₁-C₄-Alkyl)- unterbrochene C₄-C₆-Alkylenbrücke, und
   - Rⁿ: C₁-C₄-Alkyl, Phenyl oder durch Halogen, C₁-C₄-Alkyl, Methoxy, Nitro oder Trifluormethyl substituiertes Phenyl bedeuten;
vorzugsweise Safener der Formel (S-VIII) sind
1-[4-(N-2-Methoxybenzoylsulfamoyl)phenyl]-3-methylharnstoff,
1-[4-(N-2-Methoxybenzoylsulfamoyl)phenyl]-3,3-dimethylharnstoff,
1-[4-(N-4,5-Dimethylbenzoylsulfamoyl)phenyl]-3-methylharnstoff,
1-[4-(N-Naphthoylsulfamoyl)phenyl]-3,3-dimethylharnstoff,
einschließlich der Stereoisomeren und der in der Landwirtschaft gebräuchlichen Salze.

Sofern es im Einzelnen nicht anders definiert wird, gelten für die Reste in den Formeln zu (S-II) bis (S-VIII) im Allgemeinen die folgenden Definitionen.
Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein.
Alkylreste, auch in den zusammengesetzten Bedeutungen wie Alkoxy, Haloalkyl usw. haben vorzugsweise 1 bis 4 C-Atome und, bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B.
Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.
Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.
Halogen bedeutet Fluor, Chlor, Brom oder lod. Haloalkyl, Haloalkenyl und Haloalkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₂CF₃, CH₂CHFCl, CCl₃, CHCl₂, CH₂CH₂Cl. Haloalkoxy ist z.B. OCF₃, OCHF₂, OCH₂F, OCF₂CF₃, OCH₂CF₃ und OCH₂CH₂Cl. Entsprechendes gilt für sonstige Halogen substituierte Reste.
Ein Kohlenwasserstoffrest kann ein aromatischer oder ein aliphatischer Kohlenwasserstoffrest sein, wobei ein aliphatischer Kohlenwasserstoffrest im allgemeinen ein geradkettiger oder verzweigter gesättigter oder ungesättigter Kohlenwasserstoffrest ist, vorzugsweise mit 1 bis 18, besonders bevorzugt 1 bis 12 C-Atomen, z.B. Alkyl, Alkenyl oder Alkinyl.
Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.
Aryl ist im allgemeinen ein mono-, bi- oder polycyclisches aromatisches System mit vorzugsweise 6-20 C-Atomen, bevorzugt 6 bis 14 C-Atomen, besonders bevorzugt 6 bis 10 C-Atomen, z.B. Phenyl, Naphthyl, Tetrahydronaphthyl, Indenyl, Indanyl, Pentalenyl und Fluorenyl, besonders bevorzugt Phenyl.
Heterocyclischer Ring, heterocyclischer Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält.
Bevorzugt sind gesättigte Heterocyclen mit 3 bis 7 Ringatomen und einem oder zwei Heteroatomen aus der Gruppe N, O und S, wobei die Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran.
Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S. Ganz besonders bevorzugte teilweise ungesättigte Heterocyclen sind Pyrazolin, Imidazolin und Isoxazolin.
Ebenso bevorzugt ist Heteroaryl, z.B. mono- oder bicyclische aromatische Heterocyclen mit 5 bis 6 Ringatomen, die ein bis vier Heteroatome aus der Gruppe N, O, S enthalten, wobei die Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und Isoxazol. Ganz besonders bevorzugt sind Pyrazol, Thiazol, Triazol und Furan.
Substituierte Reste, wie substituierte Kohlenwasserstoffreste, z.B. substituiertes Alkyl, Alkenyl, Alkinyl, Aryl wie Phenyl und Arylalkyl wie Benzyl, oder substituiertes Heterocyclyl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Substituenten aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Substituenten entsprechende ungesättigte aliphatische Substituenten, vorzugsweise Alkenyl, Alkinyl, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.
Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-Arylamino sowie N-Heterocyclen. Dabei sind Alkylreste mit 1 bis 4 C-Atomen bevorzugt. Aryl ist dabei vorzugsweise Phenyl. Substituiertes Aryl ist dabei vorzugsweise substituiertes Phenyl. Für Acyl gilt dabei die weiter unten genannte Definition, vorzugsweise (C₁-C₄)Alkanoyl. Entsprechendes gilt für substituiertes Hydroxylamino oder Hydrazino.
Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)Alkyl, (C₁-C₄)Alkoxy, (C₁-C₄)Haloalkyl, (C₁-C₄)Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, mund p-Methoxyphenyl.
Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄-Alkyl)-carbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.
Von den Formeln (S-II) bis (S-VIII) umfasst sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Die Verbindungen der Formel (S-II) sind z.B. aus EP-A-0333131 (ZA-89/1960), EP-A-0269806 (US 4,891,057), EP-A-0346620 (AU-A-89/34951), EP-A-0174562, EP-A-0346620 (WO-A-91/08202), WO-A-91/07874 oder WO-A-95/07897 (ZA 94/7120) und der dort zitierten Literatur bekannt oder können nach oder analog den dort beschriebenen Verfahren hergestellt werden. Die Verbindungen der Formel (S-III) sind aus EP-A-0086750, EP-A-094349 (US 4,902,340), EP-A-0191736 (US 4,881,966) und EP-A-0492366 und dort zitierter Literatur bekannt oder können nach oder analog den dort beschriebenen Verfahren hergestellt werden. Einige Verbindungen sind ferner in EP-A-0582198 und WO-A-02/34048 beschrieben. Die Verbindungen der Formel (S-IV) sind aus zahlreichen Patentanmeldungen bekannt, beispielsweise US 4,021,224 und US 4,021,229. Verbindungen der Untergruppe b) sind weiterhin aus CN-A-87/102789, EP-A-365484 sowie aus "The Pesticide Manual", 11. bis 13. Auflage, British Crop Protection Council and the Royal Society of Chemistry (1997), bekannt. Die Verbindungen der Untergruppe c) sind in der WO-A-97/45016, die der Untergruppe d) in der WO-A-99/16744 (insbesondere in EP-A-365484) beschrieben. Die zitierten Schriften enthalten ausführliche Angaben zu Herstellungsverfahren und Ausgangsmaterialien und nennen bevorzugte Verbindungen. Auf diese Schriften wird ausdrücklich Bezug genommen, sie gelten durch Zitat als Bestandteil dieser Beschreibung.

Die Safener der vorstehenden Gruppen a) bis e) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der Herbizide erheblich erweitert werden und insbesondere ist durch die Verwendung von Safenern der Einsatz von Herbiziden, die bislang nur beschränkt oder mit nicht ausreichendem Erfolg eingesetzt werden konnten, d.h. von Kombinationen, die ohne Safener in niedrigen Dosierungen mit wenig Breitenwirkung zu nicht ausreichender Kontrolle der Schadpflanzen führten.

Besonders bevorzugt kommen sind als Safener in den erfindungsgemäßen Formulierungen unter anderem: 4-Dichloracetyl-1-oxa-4-aza-spiro[4.5]-decan (AD-67), 1-Dichloracetyl-hexahydro-3,3,8a-trimethylpyrrolo[1,2-a]-pyrimidin-6(2H)-on (Dicyclonon, BAS-145138), 4-Dichloracetyl-3,4-dihydro-3-methyl-2H-1,4-benzoxazin (Benoxacor), Cloquintocet, 5-Chlor-chinolin-8-oxy-essigsäure-(1-methyl-hexylester) (Cloquintocet-mexyl), α-(Cyanomethoxyimino)-phenylacetonitril (Cyometrinil), 2,2-Dichlor-N-(2-oxo-2-(2-propenylamino)-ethyl)-N-(2-propenyl)-acetamid (DKA-24), 2,2-Dichlor-N,N-di-2-propenyl-acetamid (Dichlormid), N-(4-Methyl-phenyl)-N'-(1-methyl-1-phenyl-ethyl)-harnstoff (Dymron), 4,6-Dichlor-2-phenyl-pyrimidin (Fenclorim), 1-(2,4-Dichlor-phenyl)-5-trichlormethyl-1 H-1,2,4-triazol-3-carbonsäure-ethylester (Fenchlorazol-ethyl), 2-Chlor-4-trifluormethyl-thiazol-5-carbonsäure-phenylmethylester (Flurazole), 4-Chlor-N-(1,3-dioxolan-2-yl-methoxy)-a-trifluor-acetophenonoxim (Fluxofenim), 3-Dichloracetyl-5-(2-furanyl)-2,2-dimethyl-oxazolidin (Furilazole, MON-13900), Ethyl-4,5-dihydro-5,5-diphenyl-3-isoxazolcarboxylat (Isoxadifen-ethyl), Diethyl-1-(2,4-dichlorphenyl)-4,5-dihydro-5-methyl-1H-pyrazol-3,5-dicarboxylat (Mefenpyr-diethyl), 2-Dichlormethyl-2-methyl-1,3-dioxolan (MG-191), 1,8-Naphthalsäureanhydrid, α-(1,3-Dioxolan-2-yl-methoximino)-phenylacetonitril (Oxabetrinil), 2,2-Dichlor-N-(1,3-dioxolan-2-yl-methyl)-N-(2-propenyl)-acetamid (PPG-1292), 3-Dichloracetyl-2,2-dimethyl-oxazolidin (R-28725), 3-Dichloracetyl-2,2,5-trimethyl-oxazolidin (R-29148), 1-(2-Chlor-phenyl)-5-phenyl-1 H-pyrazol-3-carbonsäure-methylester, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid und N-(2-Methoxy-benzoyl)-4-[(methylamino-carbonyl)-amino]-benzolsulfonamid.

Ganz besonders bevorzugt sind die Safenern Mefenpyr-diethyl, Cloquintocet-mexyl, Isoxadifen-ethyl, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid oder Fenchlorazol-ethyl; insbesondere ganz besonders bevorzugt sind Mefenpyr-diethyl, Cloquintocet-mexyl oder Isoxadifen-ethyl.

Besondere Ausführungsformen der Erfindung sind das Verfahren zur Förderung der Penetration und dessen Verwendung, wobei TBEP in den erfindungsgemäßen Mengen (B) mit Mischungen von Herbiziden und Safener (A), entweder gleichzeitig oder sequentiell appliziert wird.

Bevorzugte Herbizid-Safener-Mischungen sind Kombinationen der folgenden Verbindungen miteinander:
a) Verbindungen, die als ACCase-Inhibitoren wirksam sind, wie Alloxydim, Butroxydim, Clethodim, Clodinafop-propargyl, Cycloxydim, Cyhalofop-butyl, Diclofop-methyl, Fenoxaprop, Fenoxaprop-ethyl, Fenoxaprop-P, Fenoxaprop-P-ethyl, Fluazifop, Fluazifop-P-butyl, Fluazifop-butyl, Haloxyfop, Haloxyfop-P, Haloxyfop-etotyl, Haloxyfop-P-methyl, Metamifop, Profoxydim, Propaquizafop, Quizalofop-P-tefuryl, Quizalofop-P-ethyl, Sethoxydim, Tepraloxydim, Tralkoxydim und Isoxapyrifop,
b) Verbindungen, die als *p*-Hydroxyphenyl pyruvate dioxygenase (HPPD)-Inhibitoren wirksam sind, wie Benzobicyclon, Benzofenap, Isoxaflutole und dessen Diketonitrile, Mesotrione, Pyrazolynate, Pyrazoxyfen, Sulcotrione und Isoxachlortole,
c) Verbindungen verschiedener Wirkstoffgruppen, wie Atrazin, Acetochlor, Aclonifen, Alachlor, Amidochlor, Amidosulfuron, Azimsulfuron, Bentazon, Bensulfuron(methyl), Bromoxynil(-octanoat/-heptanoat), Butachlor, Bispyribac, Chlorsulfuron, Chlorimuron, Clomazone, Clopyralid, Cinosulfuron, Cyclosulfamuron, 2,4-D-Ester, 2,4-DB-Ester, 2,4-DP-Ester, CMPP-Ester, MCPA-Ester, MCPB, EPTC, Desmedipham, Diflufenican, Dicamba, Ethoxysulfuron, Ethofumesat, Flazasulfuron, Florasulam, Flucarbazone, Flumetsulam, Flufenacet, Fluoroglykofen, Fluroxypyr, Flupyrsulfuron, Foramsulfuron, Flumioxazin, Flumiclorac, Fomesafen, Glufosinate, Glyphosate, Imazapyr, Imazosulfuron, lodosulfuron, lodosulfuron-methyl, loxynil(-octanoat), Lactofen, Halosulfuron, Imazamox, Imazapic, Imazapyr, Imazethapyr, Imazaquin, Metosulam, Mesosulfuron(-methyl), (S-)Metolachlor, Metsulfuron-methyl, Metamitron, Nicosulfuron, Oxyfluorfen, Pendimethalin, Phenmedipham, Picloram, Pinoxaden, Primisulfuron-methyl, Prosulfuron, Propanil, Propoxycarbazone, Pyrazosulfuron(-methyl), Rimsulfuron, Sulfentrazone, Sulfosulfuron, Sulfometuron, Terbuthylazin, Thifensulfuron, Triasulfuron, Tribenuron, Triclopyr, Triflusulfuron-methyl, Trifluralin, Tritosulfuron, Topramezone, Oxazinon, Oxadiargyl, Metribuzin, und deren Salze, z.B. die Natriumsalze.
d) Verbindungen, die als Safener wirksam sind, wie AD 67 (4-(dichloroacetyl)-1-oxa-4-azaspiro[4.5]decane), Benoxacor, CL 304,415 (4-carboxymethylchroman-4-carboxylic acid), Cloquintocet, Cloquintocet-mexyl, Cyprosulfamide, Dichlormid, Dicyclonon, DKA-24 (N1,N2-diallyl-N2-dichloroacetylglycinamide), Fenchlorazole, Fenchlorazole-ethyl, Fenclorim, Flurazole, Fluxofenim, Furilazole, Isoxadifen-ethyl, Mefenpyr-diethyl, MG 191 (2-dichloromethyl-2-methyl-1,3-dioxolane), Naphthalsäureanhydrid (naphthalene-1,8-dicarboxylic anhydride), Oxabetrinil and TI-35 (1-dichloroacetylazepane).

In einer weiteren Ausführungsform können z.B. verschiedene Herbizide miteinander kombiniert werden, z.B. Fenoxaprop-p-ethyl + loxynil-octanoat, Diclofop-methyl + Bromoxynil-octanoat, CMPP + Bromoxynil-octanoat, MCPA + loxynil-octanoat, Bromoxynil-octanoat + Bromoxynil-heptanoat, Bromoxynil-octanoat + Bromoxynil-heptanoat + MCPA, Bromoxynil-octanoat + Bromoxynil-heptanoat+ 2,4-D, Phenmedipham + Desmedipham, Phenmedipham + Desmedipham + Ethofumesate, Metamitron + Ethofumesate, Phenmedipham + Ethofumesate + Metamitron, Fenoxaprop-p-ethyl + lodosulfuron-methyl-natrium, Fenoxaprop-p-ethyl + Diclofop-methyl, Fenoxaprop-p-ethyl + lodosulfuron-methyl-natrium + Diclofop-methyl.

Als besonders bevorzugt sind die Kombinationen aus: Foramsulfuron + lodosulfuron-methyl-sodium + Isoxadifen-ethyl, lodosulfuron-methyl-sodium + Isoxadifen-ethyl, Foramsulfuron + Isoxadifen-ethyl, Fenoxaprop-P-ethyl + Ethoxysulfuron + Isoxadifen-ethyl, Ethoxysulfuron + Isoxadifen-ethyl, Fenoxaprop-P-ethyl + Isoxadifen-ethyl, lodosulfuron-methyl-sodium + Mesosulfuron-methyl + Mefenpyr-diethyl, Mesosulfuron-methyl + Mefenpyr-diethyl, lodosulfuron-methyl-sodium + Mefenpyr-diethyl, Fenoxaprop-P-ethyl + Mefenpyr-diethyl, Fenoxaprop-P-ethyl + Diclofop-methyl + Mefenpyr-diethyl, Diclofop-methyl + Mefenpyr-diethyl, Diclofop-methyl + Sethoxydim + Mefenpyr-diethyl, Sethoxydim + Mefenpyr-diethyl, Fenoxaprop-P-ethyl + Isoproturon + Mefenpyr-diethyl, Isoproturon + Mefenpyr-diethyl, Clodinafop-propargyl + Cloquintocet-mexyl, Fenoxaprop-ethyl + Fenchlorazole-ethyl, Fenoxaprop-P-ethyl + Fenchlorazole-ethyl, Flucarbazone + Cyprosulfamide, Foramsulfuron + Cyprosulfamide, lodosulfuron(-methyl) + Cyprosulfamide, Metosulam + Cyprosulfamide, Metsulfuron(-methyl) + Cyprosulfamide, Nicosulfuron + Cyprosulfamide, Primisulfuron(.methyl) + Cyprosulfamide, Prosulfuron + Cyprosulfamide, Thifensulfuron + Cyprosulfamide, Tribenuron + Cyprosulfamide, Cloransulam-methyl + Cyprosulfamide, Chlorimuron + Cyprosulfamide, Ethoxysulfuron + Cyprosulfamide, Flazasulfuron + Cyprosulfamide, Florasulam + Cyprosulfamide, Flumetsulam + Cyprosulfamide, Halosulfuron + Cyprosulfamide, Imazamox + Cyprosulfamide, Imazapic + Cyprosulfamide, Imazapyr + Cyprosulfamide, Imazethapyr + Cyprosulfamide, Mesosulfuron + Cyprosulfamide, Propoxycarbazone + Cyprosulfamide, Sulfosulfuron + Cyprosulfamide, Amidosulfuron + Cyprosulfamide, Chlorsulfuron + Cyprosulfamide, Imazaquin + Cyprosulfamide, Triasulfuron + Cyprosulfamide, Sulfometuron + Cyprosulfamide, Cyclosulfamuron + Cyprosulfamide, Flupyrsulfuron + Cyprosulfamide, Pyrazosulfuron + Cyprosulfamide, Azimsulfuron + Cyprosulfamide, Bensulfuron + Cyprosulfamide, Bispyribac + Cyprosulfamide, Rimsulfuron + Cyprosulfamide, Tritosulfuron + Cyprosulfamide, Sulcotrione + Cyprosulfamide, Clomazone + Cyprosulfamide, Mesotrione + Cyprosulfamide, Topramezone + Cyprosulfamide, Metribuzin + Cyprosulfamide, Bentazon + Cyprosulfamide, Bromoxynil + Cyprosulfamide, Propanil + Cyprosulfamide, Atrazin + Cyprosulfamide, Terbuthylazin + Cyprosulfamide, EPTC + Cyprosulfamide, Tepraloxydim + Cyprosulfamide, Clethodim + Cyprosulfamide, Alloyxdim + Cyprosulfamide, Sethoxydim + Cyprosulfamide, Tralkoxydim + Cyprosulfamide, Clodinafop-propargyl + Cyprosulfamide, Cyhalofop-butyl + Cyprosulfamide, Diclofop-methyl + Cyprosulfamide, Fenoxaprop-P-ethyl + Cyprosulfamide, Fluazifop-P-butyl + Cyprosulfamide, Haloxyfop-methyl + Cyprosulfamide, Haloxyfop-etotyl + Cyprosulfamide, Haloxyfop-R-methyl + Cyprosulfamide, Haloxyfop-ethoxyethyl + Cyprosulfamide, Propaquizafop + Cyprosulfamide, Quizalofop-P-tefuryl + Cyprosulfamide, Quizalofop-P-ethyl + Cyprosulfamide, Acetochlor + Cyprosulfamide, S-Metolachlor + Cyprosulfamide, Flumioxazin + Cyprosulfamide, Flumiclorac + Cyprosulfamide, Fomesafen + Cyprosulfamide, Sulfentrazone + Cyprosulfamide, Dicamba + Cyprosulfamide, MCPA + Cyprosulfamide, MCPB + Cyprosulfamide, 2,4-D + Cyprosulfamide, Clopyralid + Cyprosulfamide, Fluroxypyr + Cyprosulfamide, Picloram + Cyprosulfamide, Triclopyr + Cyprosulfamide, Glufosinate + Cyprosulfamide, Glyphosate + Cyprosulfamide und Pendimethalin + Cyprosulfamide.

Das Gewichtsverhältnis Safener : Herbizid kann innerhalb weiter Grenzen variieren und liegt vorzugsweise im Bereich von 1 : 100 bis 100 : 1, insbesondere von 1 : 100 bis 50 : 1, ganz besonders bevorzugt 1 : 10 bis 10 : 1. Die jeweils optimalen Mengen an Herbizid(en) und Safener(n) sind üblicherweise vom Typ des Herbizids und/oder vom verwendeten Safener sowie von der Art des zu behandelnden Pflanzenbestandes abhängig.

Ganz besonders bevorzugt in den erfindungsgemäßen Pflanzenschutzmittel sind Herbizide aus der Gruppe der ACCase-Inhibitoren, wie Alloxydim, Butroxydim, Clethodim, Clodinafop-propargyl, Cycloxydim, Cyhalofop-butyl, Diclofop-methyl, Fenoxaprop, Fenoxaprop-ethyl, Fenoxaprop-P, Fenoxaprop-P-ethyl, Fluazifop, Fluazifop-P-butyl, Fluazifop-butyl, Haloxyfop, Haloxyfop-P, Haloxyfop-etotyl, Haloxyfop-P-methyl, Metamifop, Profoxydim, Propaquizafop, Quizalofop-P-tefuryl, Quizalofop-P-ethyl, Sethoxydim, Tepraloxydim, Tralkoxydim und Isoxapyrifop; aus der Gruppe der p-Hydroxyphenyl pyruvate dioxygenase (HPPD)-Inhibitoren, wie Benzobicyclon, Benzofenap, Isoxaflutole und dessen Diketonitrile, Mesotrione, Pyrazolynate, Pyrazoxyfen, Sulcotrione und Isoxachlortole; aus der Gruppe der ALS-Inhibitoren, Hydroxybenzonitrile und weiterer verschiedener Wirkstoffgruppen, wie Atrazin, Acetochlor, Aclonifen, Alachlor, Amidochlor, Amidosulfuron, Azimsulfuron, Bentazon, Bensulfuron(-methyl), Bromoxynil(-octanoat/-heptanoat), Butachlor, Bispyribac, Chlorsulfuron, Chlorimuron, Clomazone, Clopyralid, Cinosulfuron, Cyclosulfamuron, 2,4-D-Ester, 2,4-DB-Ester, 2,4-DP-Ester, CMPP-Ester, MCPA-Ester, MCPB, EPTC, Desmedipham, Diflufenican, Dicamba, Ethoxysulfuron, Ethofumesat, Flazasulfuron, Florasulam, Flucarbazone, Flumetsulam, Flufenacet, Fluoroglykofen, Fluroxypyr, Flupyrsulfuron, Foramsulfuron, Flumioxazin, Flumiclorac, Fomesafen, Glufosinate, Glyphosate, lmazapyr, Imazosulfuron, lodosulfuron, lodosulfuron-methyl, loxynil(-octanoat), Lactofen, Halosulfuron, Imazamox, Imazapic, Imazapyr, Imazethapyr, Imazaquin, Metosulam, Mesosulfuron(-methyl), (S-)Metolachlor, Metsulfuron-methyl, Metamitron, Nicosulfuron, Oxyfluorfen, Pendimethalin, Phenmedipham, Picloram, Pinoxaden, Primisulfuron-methyl, Prosulfuron, Propanil, Propoxycarbazone, Pyrazosulfuron(-methyl), Rimsulfuron, Sulfentrazone, Sulfosulfuron, Sulfometuron, Terbuthylazin, Thifensulfuron, Triasulfuron, Tribenuron, Triclopyr, Triflusulfuron-methyl, Trifluralin, Tritosulfuron, Topramezone, Oxazinon, Oxadiargyl, Metribuzin, und deren Salze, z.B. die Natriumsalze; aus der Gruppe der Pflanzenwuchsregulatoren, wie Ethephon, Cyclanilide und Thidiazuron; aus der Gruppe der Safener, wie AD 67 (4-(dichloroacetyl)-1-oxa-4-azaspiro[4.5]decane), Benoxacor, CL 304,415 (4-carboxymethylchroman-4-carboxylic acid), Cloquintocet, Cloquintocet-mexyl, Cyprosulfamide, Dichlormid, Dicyclonon, DKA-24 (N1,N2-diallyl-N2-dichloroacetylglycinamide), Fenchlorazole, Fenchlorazole-ethyl, Fenclorim, Flurazole, Fluxofenim, Furilazole, Isoxadifen-ethyl, Mefenpyr-diethyl, MG 191 (2-dichloromethyl-2-methyl-1,3-dioxolane), Naphthalsäureanhydrid (naphthalene-1,8-dicarboxylic anhydride), Oxabetrinil and TI-35 (1-dichloroacetylazepane); sowie Mischungen aus Herbiziden und Safenern, wie Isoxadifen-ethyl-Mischungen mit Foramsulfuron, lodosulfuron-methyl-sodium, Fenoxaprop-P-ethyl, Ethoxysulfuron, wie Mefenpyr-diethyl-Mischungen mit lodosulfuron-methyl-sodium, Mesosulfuron-methyl, Fenoxaprop-P-ethyl, Diclofop-methyl, Sethoxydim, Isoproturon, wie Clodinafop-propargyl + Cloquintocet-mexyl, wie Fenoxaprop-P-ethyl + Fenchlorazole-ethyl, wie Cyprosulfamide-Mischungen mit Flucarbazone, Foramsulfuron, lodosulfuron(-methyl), Metosulam, Metsulfuron(-methyl), Nicosulfuron, Primisulfuron(-methyl), Prosulfuron, Thifensulfuron, Tribenuron, Cloransulam-methyl, Chlorimuron, Ethoxysulfuron, Flazasulfuron, Florasulam, Flumetsulam, Halosulfuron, lmazamox, Imazapic, Imazapyr, Imazethapyr, Mesosulfuron, Propoxycarbazone, Sulfosulfuron, Amidosulfuron, Chlorsulfuron, Imazaquin, Triasulfuron, Sulfometuron, Cyclosulfamuron, Flupyrsulfuron, Pyrazosulfuron, Azimsulfuron, Bensulfuron, Bispyribac, Rimsulfuron, Tritosulfuron, Sulcotrione, Clomazone, Mesotrione, Topramezone, Metribuzin, Bentazon, Bromoxynil, Propanil, Atrazin, Terbuthylazin, EPTC, Tepraloxydim, Clethodim, Alloyxdim, Sethoxydim, Tralkoxydim, Clodinafop-propargyl, Cyhalofop-butyl, Diclofop-methyl, Fenoxaprop-P-ethyl, Fluazifop-P-butyl, Haloxyfop-methyl, Haloxyfop-etotyl, Haloxyfop-R-methyl, Haloxyfop-ethoxyethyl, Propaquizafop, Quizalofop-P-tefuryl, Quizalofop-P-ethyl, Acetochlor, S-Metolachlor, Flumioxazin, Flumiclorac, Fomesafen, Sulfentrazone, Dicamba, MCPA, MCPB, 2,4-D, Clopyralid, Fluroxypyr, Picloram, Triclopyr, Glufosinate, Glyphosate, Pendimethalin.

Die erfindungsgemäßen Pflanzenschutzmittel enthalten in der Regel 0,01 bis 99 Gew.-%, insbesondere 0,1 bis 95 Gew.-%, der Wirkstoffe aus der Gruppe der Herbizide und/oder Safener. Die flächenbezogenen Aufwandmengen der Komponente (A) liegen im allgemeinen zwischen 10 und 2000 g AS/ha (AS = Aktivsubstanz, d. h. Aufwandmenge bezogen auf den aktiven Wirkstoff), bevorzugt zwischen 50 und 300 g AS/ha.

Tributoxyethylphosphat (TBEP) als Komponente (B) hat die CAS Regno: 4712-55-4 und wird unter diesem Eintrag in der Fachliteratur in seinen weiteren Eigenschaften ausführlich beschrieben.

Der Gehalt an TBEP (B) in den erfindungsgemäßen Pflanzenschutzmitteln ist abhängig von der flächenbezogenen Applikationsmenge pro Hektar (ha) und muss daher entsprechend angepasst werden. Dies gilt auch für die Herstellung einer Applikationslösung, beispielsweise einer Spritzbrühe, beim Einsatz des erfindungsgemäßen Verfahrens. Die flächenbezogenen Applikationsmengen für TBEP (B) liegen zwischen 2,5 und 150 g/ha, bevorzugt 5 bis 100 g/ha, besonders bevorzugt 10 bis 100 g/ha, wobei das Volumen der Spritzbrühe in der Regel zwischen 100-500 Uha liegt.

Gegebenenfalls kann als Komponente (C) bei der Herstellung des erfindungsgemäßen Pflanzenschutzmittels und/oder der Applikation des erfindungsgemäßen Verfahrens, bevorzugt in Form von Spritzbrühen, die Zugabe eines oder mehrerer Emulgatoren notwendig sein. Geeignete Emulgatoren sind aus der Gruppe der ionischen und nicht-ionischen Emulgatoren und deren Gemische mit HLB-Werten von 10 bis 17 (z.B. Emulgator 1371 B). Sie können entweder direkt und/oder durch die Formulierung der Komponenten (A) und/oder (B) zugesetzt werden.

Die flächenbezogenen Aufwandmengen der Komponente (C) liegen bei der Applikation des erfindungsgemäßen Pflanzenschutzmittels und/oder des erfindungsgemäßen Verfahrens im allgemeinen zwischen 10 und 200 g/ha, bevorzugt zwischen 20 und 200 g/ha.

Als weitere Hilfs - und Zusatzstoffe (Komponente D), die in den erfindungsgemäßen, vorzugsweise flüssige Formulierungen enthalten sein können, kommen alle üblichen Formulierhilfsmittel in Frage, wie organische Solventien, Entschäumer, von Komponente (C) verschiedene Emulgatoren, Dispergiermittel, Konservierungsmittel, Säuren und Basen, Farbstoffe, Füllstoffe und auch Wasser.

Als organische Solventien kommen alle üblichen organischen Lösungsmittel in Betracht, welche die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso^{®}, Pflanzen- und Mineralöle, wie Testbenzin, Petroleum, Alkylbenzole und Spindelöl, weiterhin Propylencarbonat, Tetrachlormethan, Chloroform, Methylenchlorid und Dichlormethan, außerdem Ester, wie Ethylacetat, Lactate ferner Lactone, wie Butyrolacton, außerdem Lactame, wie N-Methylpyrrolidon, N-Octylpyrrolidon, N-Dodecylpyrrolidon N-Octylcaprolactam und N-Methylcaprolactam, γ-Butyrolacton, Dimethylformamid sowie Tributylphosphat.

Als Entschäumer kommen übliche, in Formulierungen von agrochemischen Wirkstoffen vorhandene Entschäumer in Frage. Beispielhaft genannt seien Silikonöle, Dispersionen von Silikonölen, Magnesiumstearat, Phosphin- und Phosphonsäuren, insbesondere Fluowet PL 80^{®}.

Als von Komponente (C) verschiedene Emulgatoren kommen übliche, in Formulierungen von agrochemischen Wirkstoffen vorhandene oberflächenative Substanzen in Frage. Beispielhaft genannt seien ethoxylierte Nonylphenole, Polyethylenglykolether von linearen Alkoholen, Endgruppen-verschlossene und nicht Endgruppen-verschlossene alkoxylierte lineare und verzweigte, gesättigte und ungesättigte Alkohole, Umsetzungsprodukte von Alkylphenolen mit Ethylenoxid und/oder Propylenoxid, Ethylenoxid- Propylenoxid-Blockcopolymere, Polyethylenglykole und Polypropylenglykole, weiterhin Fettsäureester, Endgruppen-verschlossene und nicht Endgruppen-verschlossene alkoxylierte lineare und verzweigte, gesättigte und ungesättigte Fettsäuren, Alkylsulfonate, Alkylsulfate, Alkylethersulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate.

Als Dispergiermittel kommen alle üblicherweise in Pflanzenschutzmitteln für diesen Zweck eingesetzten Substanzen in Betracht. Vorzugsweise genannt seien, neben den oben unter von Komponente (C) verschiedenen Emulgatoren genannten Verbindungen, natürliche und synthetische, wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Ligninsulfonate, Polymethacrylsäure und Co-Polymerisate aus (Meth)acrylsäure und (Meth)acrylsäureestern, und außerdem auch mit Alkalimetallhydroxid neutralisierte Co-Polymerisate aus Methacrylsäure und Methacrylsäureester.

Als Konservierungsmittel kommen alle üblicherweise für diesen Zweck in Pflanzenbehandlungsmitteln vorhandenen Substanzen in Betracht. Als Beispiele genannt seien Preventol^{®} und Proxel^{®}.

Als Farbstoffe kommen alle für die Herstellung von Pflanzenschutzmitteln üblichen anorganischen oder organischen Farbstoffe in Frage. Beispielhaft genannt seien Titandioxid, Farbruß, Zinkoxid und Blaupigmente.

Als Füllstoffe kommen alle üblicherweise für diesen Zweck in Pflanzenschutzmitteln eingesetzten Substanzen in Betracht. Vorzugsweise genannt seien anorganische Partikel, wie Carbonate, Silikate und Oxide mit einer mittleren Teilchengröße von 0,005 bis 10 µm, besonders bevorzugt von 0,02 bis 2 µm. Beispielhaft erwähnt seien Siliziumdioxid, sogenannte hochdisperse Kieselsäure, Kieselgele, sowie natürliche und synthetische Silikate und Alumosilikate.

Als Verbindungen, die als Emulsions-Stabilisatoren und/oder Kristallisationsinhibitoren wirken, kommen alle üblicherweise für diesen Zweck in Pflanzenschutzmitteln eingesetzte Substanzen in Betracht.

Der Gehalt an den einzelnen Komponenten in den erfindungsgemäßen Pflanzenschutzmitteln und die flächenbezogenen Applikationsmenge beim Einsatz des erfindungsgemäßen Verfahrens kann innerhalb eines größeren Bereichs variiert werden.

Zu den für die erfindungsgemäßen Pflanzenschutzmitteln mit den Komponenten (A) und (B) sowie gegebenenfalls den Komponenten (C) und/oder (D) in Frage kommenden Formulierungstypen gehören prinzipiell alle Formulierungen, die auf Pflanzen oder deren Vermehrungsgut ausgebracht werden. Die zu deren Herstellung verwendeten Verfahren sind dem Fachmann allgemein geläufig und beispielsweise beschrieben in Winnacker-Küchler, "Chemische Technologie" Band 7, C. Hanser Verlag München, 4. Aufl., 1986; J.W. van Valkenburg, "Pesticide Formulations", Marcel Dekker N.Y., 1973, K. Martens, "Spray Drying Handbook", 3rd Ed. 1979, G. Goodwin Ltd., London, oder Mollet, Grubenmann, "Formulierungstechnik", Wiley-VCH-Verlag, Weinheim, 2000.

Daneben kommen für die einzelnen Komponenten des erfindungsgemäßen Verfahrens prinzipiell auch alle Formulierungstypen in Frage.

Beispiele für Formulierungstypen sind die im "Manual on development and use of FAO and WHO specifications for pesticides" (FAO and WHO, 2002, appendix E) erwähnten (jeweils Verwendung der GCPF-Formulierungskodes mit englischer Abkürzung und Bezeichnung): AL Any other liquid; AP Any other powder; CF Capsule Suspension for Seed Treatment; CG Encapsulated granule; CL Contact liquid or gel; CP Contact powder; CS Capsule suspension; DC Dispersible concentrate; DP Dustable powder; DS Powder for dry seed treatment; EC Emulsifiable concentrate; ED Electrochargeable liquid; EG Emulsifiable Granule; EO Emulsion, water in oil; EP emulsifiable powder; ES Emulsion for seed treatment; EW Emulsion, oil in water; FG Fine granule; FS Flowable concentrate for seed treatment; GF Gel for Seed Treatment; GG Macrogranule; GL Emulsifiable gel; GP Flo-dust; GR Granule; GS Grease; GW Water soluble gel; HN Hot fogging concentrate; KK Combi-pack solid/liquid; KL Combi-pack liquid/liquid; KN Cold fogging concentrate; KP Combi-pack solid/solid; LA Lacquer; LS Solution for seed treatment; ME Microemulsion; MG Microgranule; OD Oil dispersion; OF Oil miscible flowable concentrate/oil miscible suspension; OL Oil miscible liquid; OP Oil dispersible powder; PA Paste; PC Gel or paste concentrate; PO Pour-on; PR Plant rodlet; PT Pellet; SA Spot-on; SC suspension concentrate; SD suspension concentrate for direct application; SE Suspo-emulsion; SG Water soluble granule; SL Soluble concentrate; SO Spreading oil; SP Water soluble powder; SS Water soluble powder for seed treatment; ST Water soluble tablet; SU Ultra-low volume (ULV) suspension; TB Tablet; TC Technical material; TK Technical concentrate; UL Ultra-low volume (ULV) liquid; WG Water dispersible granules; WP Wettable powder; WS Water dispersible powder for slurry seed treatment; WT Water dispersible tablet; XX Others.

Bevorzugt sind flüssige Formulierungstypen. Hierzu gehören die Formulierungstypen OD Oil dispersion; DC (GCPF-Formulierungskode für dispergierbares Konzentrat); EC (GCPF-Formulierungskode für Emulsionskonzentrat); EW (GCPF-Formulierungskode für Öl-in-Wasser-Emulsion); ES (GCPF-Formulierungskode für Emulsionsbeize); FS (GCPF-Formulierungskode für Mehrphasenkonzentrat zur Saatgutbehandlung); EO (GCPF-Formulierungskode für Wasser in Öl Emulsion); ME (GCPF-Formulierungskode für Mikroemulsion); SE (GCPF-Formulierungskode für Suspoemulsion); SL (GCPF-Formulierungskode für wasserlösliches Konzentrat); CS (GCPF-Formulierungskode für Kapselsuspension) und AL (GCPF-Formulierungskode für gebrauchsfertige Flüssigformulierung, sonstige Flüssigkeiten zur unverdünnten Anwendung).

Besonders bevorzugt sind Öldispersionen (syn. oil dispersion; Formulierungstyp OD) Emulsionskonzentrate (Formulierungstyp EC).

In Spritzpulvern beträgt die Wirkstoffkonzentration z. B. etwa 10 bis 90 Gew.-%; der Rest zu 100 Gew.-% besteht aus TBEP (B) und üblichen Formulierungsbestandteilen (Emulgator, Hilfs- und Zusatzstoffen), welches für alle Formulierungen gilt. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0.05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%. Bei Öldispersionen kann die Wirkstoffkonzentration etwa 1 bis 50, vorzugsweise 3 bis 30 Gew.-% betragen.

Weiterhin Gegenstand der Erfindung ist ein Verfahren zur Bekämpfung von Schadorganismen, vorzugsweise schädlichen Pflanzen, wobei das erfindungsgemäße Pflanzenschutzmittel bzw. die im erfindungsgemäßen Verfahren eingesetzten Komponenten, bevorzugt in einer wirksamen Menge, auf die Schadpflanzen appliziert wird.

Die Erfindung betrifft weiterhin auch erfindungsgemäße Pflanzenschutzmittel und Verfahren, enthaltend mindestens die Komponenten (A) und (B), die in einer bevorzugten Ausführungsform überadditive Effekte (Synergismus) zeigen. Aufgrund der verbesserten Kontrolle der Schadorganismen durch die erfindungsgemäßen Pflanzenschutzmittel und Verfahren wird es möglich, die Aufwandmenge zu senken und/oder die Sicherheitsmarge zu erhöhen. Beides ist sowohl ökonomisch als auch ökologisch sinnvoll. Die Wahl der von den Komponenten (A) und (B) einzusetzenden Mengen und das Verhältnis der Komponenten (A) : (B) sind dabei von einer ganzen Reihe von Faktoren abhängig.

Die Herstellung der erfindungsgemäßen Pflanzenschutzmittel erfolgt z.B. in der Weise, dass man die Komponenten in den jeweils gewünschten Verhältnissen miteinander vermischt. Handelt es sich bei den Herbiziden und/oder Safenern, im Folgenden als agrochemische Wirkstoffe bezeichnet, um eine Festsubstanz, so setzt man diesen im allgemeinen entweder in fein gemahlener Form oder in Form einer Lösung oder Suspension in einem organischen Solvens oder Wasser ein. Ist der agrochemische Wirkstoff flüssig, so erübrigt sich häufig die Verwendung eines organischen Lösungsmittels. Es ist außerdem möglich, einen festen agrochemischen Wirkstoff in Form einer Schmelze einzusetzen.

Die Temperaturen können bei der Durchführung des Verfahrens in einem bestimmten Bereich variiert werden. Man arbeitet im allgemeinen bei Temperaturen zwischen 0°C und 80°C, vorzugsweise zwischen 10°C und 60°C.

Zur Herstellung erfindungsgemäßer Pflanzenschutzmittel geht man im Allgemeinen so vor, dass man TBEP (B) mit einem oder mehreren der agrochemischen Wirkstoffe (A) sowie gegebenenfalls mit dem Emulgator (C) und den Hilfs- und Zusatzstoffen (D) vermischt. Die Reihenfolge, in der die Komponenten miteinander vermischt werden, hängt vom jeweiligen Formulierungstyp ab.

Zur Durchführung des Herstellungsverfahrens kommen übliche Geräte in Betracht, die zur Herstellung von agrochemischen Formulierungen eingesetzt werden.

Zum Einsatz des erfindungsgemäßen Pflanzenschutzmittels und zur Durchführung des erfindungsgemäßen Verfahrens können als Applikationsformen alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stengel, Stamm, Blatt), wie beispielsweise Stamminjektion bei Bäumen oder Stengelbandagen bei perennierenden Pflanzen, und eine Reihe spezieller indirekter Applikationsverfahren.

Die jeweilige flächen- und/oder objektbezogene Aufwandmenge der erfindungsgemäßen Pflanzenschutzmittel unterschiedlichster Formulierungstypen und des erfindungsgemäßen Verfahrens zur Bekämpfung der genannten Schadorganismen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter Öl pro Hektar bei der ,Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.-% bis 99 Gew.-%, besonders bevorzugt von 0,1 Gew.-% bis 90 Gew.-%.

Die erfindungsgemäßen Pflanzenschutzmittel unterschiedlichster Formulierungstypen, wie auch die zur Durchführung des erfindungsgemäßen Verfahrens notwendigen Komponenten, können z.B. in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Die Aufwandmenge an den erfindungsgemäßen Pflanzenschutzmitteln unterschiedlichster Formulierungstypen, wie auch die zur Durchführung des erfindungsgemäßen Verfahrens notwendigen Komponenten, kann innerhalb eines größeren Bereiches variiert werden. Sie richtet sich nach den jeweiligen Herbiziden und/oder Safenern und nach deren Gehalt in den Formulierungen.

Bei dem erfindungsgemäßen Verfahren zur Förderung der Penetration von Wirkstoffen in Pflanzen wird das zu verwendende TBEP (B) in der Regel zusammen mit dem bzw. den Wirkstoffen (A) oder unmittelbar hintereinander ausgebracht, vorzugsweise in Form einer Spritzbrühe, welche TBEP (B) in erfindungsgemäßen Mengen und den oder die Wirkstoffe (A) in wirksamen Mengen und gegebenenfalls einen oder mehrere Emulgatoren (C) enthält. Zusätzlich können weitere übliche Hilfs- und Zusatzmittel zugesetzt werden. Die Spritzbrühe wird bevorzugt auf Basis von Wasser und/oder einem Öl, z.B. einem hochsiedenden Kohlenwasserstoff wie Kerosin oder Paraffin hergestellt. Dabei können die Komponenten für das erfindungsgemäße Verfahren entweder als Tankmischung oder über eine "FertigFormulierung" ("ready-to-use formulation"; Co-Formulierung) realisiert werden.

Im Falle von Herbiziden und/oder Safenern ist das Aufbringen auf die Schadpflanze bzw. Kulturpflanze bevorzugt. Die erfindungsgemäß behandelten Pflanzen sind, soweit es den Einsatz von Herbiziden betrifft, alle Arten von Schadpflanzen, wie Unkräutern. Im Hinblick auf die Kulturpflanzen ist die Anwendung in wirtschaftlich bedeutenden, beispielsweise auch transgenen Kulturen von Nutz- und Zierpflanzen, z.B. von Getreide, wie Weizen, Gerste, Roggen, Hafer, Hirse, Reis, Maniok und Mais, oder auch Kulturen von Erdnuss, Zuckerrübe, Baumwolle, Soja, Raps, Kartoffel, Tomate, Erbse und anderen Gemüsesorten bevorzugt.

Die erfindungsgemäßen Pflanzenschutzmittel, sowie die erfindungsgemäßen Verfahren, weisen eine Reihe von Vorteilen auf. So wird die allgemeine Penetration der Wirkstoffe in das Pflanzengewebe durch TBEP deutlich verbessert. Das schnellere Einsetzen der Penetration bewirkt somit auch eine höhere Regenfestigkeit. Gleichzeitig ist die Penetration bei niedrigeren Temperaturen (beispielsweise kleiner 15° C) verbessert. Im Hinblick auf die Kulturpflanzenverträglichkeit erwies sich in Versuchen TBEP als verträglicher als andere Alkylester-Additive. Insgesamt ermöglicht die Verwendung von TBEP damit Einsparungen an den eingesetzten Wirkstoffen. Daneben ist TBEP weniger belastend für die Umwelt, da es über eine reduzierte Flüchtigkeit verfügt.

Die Erfindung wird durch die Beispiele näher erläutert ohne sie darauf zu beschränken.

### Beispiele

### Penetrationstest

In diesem Test wurde die Penetration von Wirkstoffen durch enzymatisch isolierte Kutikeln von Apfelbaumblättern gemessen. Die Kutikeln repräsentieren alle grünen Pflanzenteile, wie Blattspreite, Blattstiel, Stengel, Stamm, Hypokotyl und viele Früchte.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 Gew.-%ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen (= Transportkammern) aus Edelstahl eingelegt. Dazu wurden die Kutikeln mit einer Pinzette mittig auf die mit Silikonfett bestrichenen Ränder der Diffusionszellen platziert und mit einem ebenfalls gefetteten Ring verschlossen. Die Anordnung wurde so gewählt, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt.

Zur Bestimmung der Penetration wurden jeweils 10 µl einer Spritzbrühe der in den Beispielen genannten Zusammensetzung auf die Außenseite einer Kutikula appliziert.

In den Spritzbrühen wurden jeweils die unten in den Tabellen aufgelisteten Lösungsmittel (Leitungswasser oder einem Gemisch aus Aceton 20 Gew.-% / Leitungswasser 80 Gew.-%) verwendet.

Nach dem Auftragen der Spritzbrühen ließ man jeweils das Lösungsmittel verdunsten, drehte dann jeweils die Kammern um und stellte sie in thermostatisierte Wannen, wobei auf die Außenseite der Kutikula Luft mit einer definierten Temperatur und Luftfeuchtigkeit geblasen wurde. Die einsetzende Penetration fand daher bei einer relativen Luftfeuchtigkeit von 60 % und einer eingestellten Temperatur von 20 bzw. 25 °C statt. Die Wirkstoffpenetration wurde mit radioaktiv markiertem Wirkstoff gemessen.

**Tabelle 1: Förderung der Penetration verschiedener Herbizide und Safener* durch TBEP im Vergleich zur Kontrolle**

| Wirkstoff ohne/mit TBEP | % Penetration (nach Stunden)** | % Penetration (nach Stunden)** |
|---|---|---|
| Safener | 1,7 (3) | 17,4 (24) |
| 0,2 g/l Isoxadifen-ethyl (A) | | |
| 0,2 g/l Isoxadifen-ethyl (A) | 26,5(3) | 73,1(24) |
| + 0,5 g/l TBEP (B) | | |
| Safener | 0,4 (3) | 4,9 (24) |
| 0,2 g/l Mefenpyr-diethyl (A) | | |
| 0,2 g/l Mefenpyr-diethyl (A) | 3,4 (3) | 25,5 (24) |
| + 0,5 g/l TBEP (B) | | |
| Safener | 0,1 (3) | 0,3 (24) |
| 0,2 g/l Cyprosulfamide (A) | | |
| 0,2 g/l Cyprosulfamide (A) | 5,7 (3) | 10,2 (24) |
| + 0,5 g/l TBEP (B) | | |
| Herbizid (Wachstumsregulator) | 0,6 (6) | 0,9 (24) |
| 0,2 g/l Thidiazuron (A) | | |
| 0,2 g/l Thidiazuron (A) | 74,4 (6) | 93,1 (24) |
| mit 3 g/l TBEP (B) | | |

| | | |
|---|---|---|
| * Wirkstoff gelöst in einem Gemisch aus Aceton/ Leitungswasser (20/80 Gew.-%); ** Mittelwerte aus 4-8 Wiederholungen für die Penetration durch Apfelblattkutikeln (Temperatur = 20-25°C, rel. Luftfeuchte 56-60 %); Isoxadifen-ethyl (Hersteller Bayer CropScience), Mefenpyr-diethyl (Hersteller Bayer CropScience), Cyprosulfamide (4-Cyclopropylaminocarbonyl-N-(2-methoxybenzoyl)benzolsulfonamid, Hersteller Bayer CropScience), Thidiazuron (Hersteller Bayer CropScience). | | |

Wie anhand der in der Tabelle aufgeführten Beispiele zu erkennen ist, führt TBEP zu einer beträchtlichen Aufnahmesteigerung der Wirkstoffe.

## Patentansprüche

1. Pflanzenschutzmittel, enthaltend die Komponenten
(A) einen oder mehrere Wirkstoffe aus der Gruppe der Herbizide und/oder Safener,
(B) Tributoxyethylphosphat (TBEP) in Dosierungen von 2,5 bis 150,0 g/ha,
(C) gegebenenfalls einen oder mehrere Emulgatoren, vorzugsweise aus der Gruppe der ionischen und nicht-ionischen Emulgatoren und deren Gemische mit HLB-Werten von 10 bis 17, und
(D) gegebenenfalls einen oder mehrere weitere Hilfs - und Zusatzstoffe.

2. Verwendung der Komponenten eines Pflanzenschutzmittels gemäß Anspruch 1, welches auf die Schadpflanzen appliziert wird.

3. Herstellung des Pflanzenschutzmittels gemäß Anspruch 1, wobei man die Komponenten in den jeweils gewünschten Verhältnissen miteinander vermischt.

4. Verfahren zur Bekämpfung von Schadorganismen, wobei man die Komponenten eines Pflanzenschutzmittels gemäß Anspruch 1, auf die Schadpflanzen appliziert wird.

5. Verfahren zur Förderung der Penetration, wobei man die Komponenten
(A) einen oder mehrere Wirkstoffe aus der Gruppe der Herbizide und/oder Safener,
(B) Tributoxyethylphosphat (TBEP) in Dosierungen von 2,5 bis 150,0 g/ha und
(C) gegebenenfalls einen oder mehrere Emulgatoren, vorzugsweise aus der Gruppe der ionischen und nicht-ionischen Emulgatoren und deren Gemische mit HLB-Werten von 10 bis 17,
gleichzeitig oder sequentiell auf die Schadpflanzen appliziert.

6. Verwendung des Verfahrens gemäß Anspruch 5, wobei man die Komponenten gleichzeitig oder sequentiell auf die Schadpflanzen appliziert.

7. Verfahren zur Bekämpfung von Schadorganismen, wobei das Verfahren gemäß Anspruch 5, auf die Schadpflanzen appliziert wird.
